# EUROPEAN PATENT SPECIFICATION

(11) **EP 2 933 713 B1**
(45) Date of publication and mention of the grant of the patent: **10.04.2019**
(21) Application number: 13851150.6
(22) Date of filing: 30.10.2013
(51) Int. Cl.: G06F 3/0488, G06F 3/023, G06F 3/041, G06F 3/0484, H03M 11/04, H04M 1/23

(54) **TERMINAL DEVICE AND RECORDING MEDIUM FOR ASSISTING THE USER WITH KEY INPUT**
ENDGERÄT UND AUFZEICHNUNGSMEDIUM ZUR UNTERSTÜTZUNG DES BENUTZERS BEI EINER TASTENEINGABE
DISPOSITIF TERMINAL ET SUPPORT D'ENREGISTREMENT POUR AIDER L'UTILISATEUR A UNE SAISIE CLAVIER

(30) Priority: 05.11.2012 JP 2012243783
(43) Date of publication of application: 21.10.2015
(73) Proprietor: NTT DOCOMO, INC., Chiyoda-ku Tokyo 100-6150 (JP)
(72) Inventor: TAGAYA, Masashi, Tokyo 100-6150 (JP); KOBAYASHI, Shigeko, Tokyo 100-6150 (JP); TSUKAMOTO, Masakatsu, Tokyo 100-6150 (JP); AOYAGI, Sadanori, Tokyo 100-6150 (JP); MORINAGA, Yasuo, Tokyo 100-6150 (JP)
(74) Representative: MERH-IP Matias Erny Reichl Hoffmann Patentanwälte PartG mbB
(86) International application number: PCT/JP2013/079356
(87) International publication number: WO 2014/069504

(56) References cited:
- EP-A1- 2 426 645
- EP-A2- 2 166 435
- WO-A1-2010/073329
- WO-A1-2012/157272
- WO-A2-2004/051392
- JP-A- 2010 055 510
- JP-A- 2010 102 474
- JP-A- 2011 154 524
- JP-A- 2012 058 838
- JP-A- 2012 058 920
- US-A1- 2010 177 121
- US-A1- 2011 242 038

## Description

### [TECHNICAL FIELD]

The present invention mainly relates to a terminal device on which input operations are performed through a touch panel, and a screen display method, a hover position correction method, and a recording medium for the terminal device.

### [BACKGROUND ART]

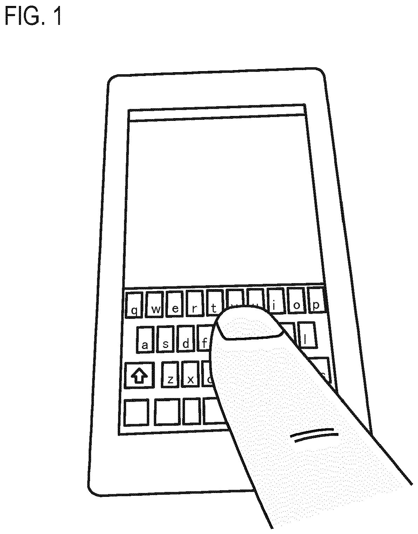

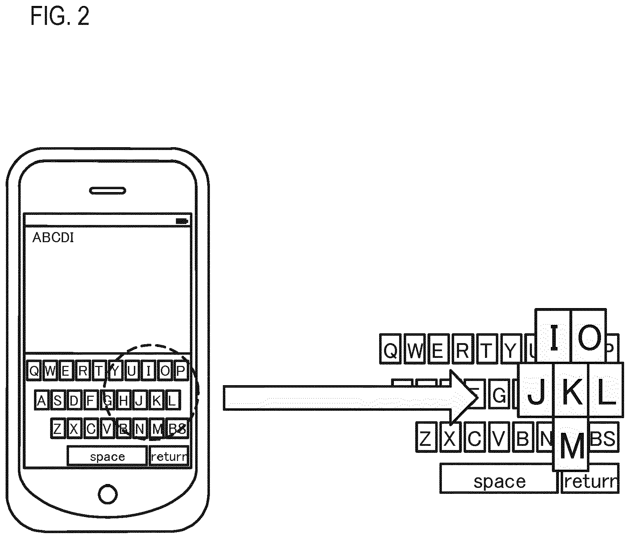

Nowadays, there is a growth in the number of terminal devices (such as mobile terminals, tablet computers, PDAs, e-book terminals, digital audio players, and game machines, for example) that have a virtual keyboard or the like displayed on a touch panel and sense contact of a user's finger by a capacitance change or pressing force change, thereby enabling input operations through the touch panel. A key input in a mobile terminal with a conventional touch panel input method is described with reference to Fig. 1. Fig. 1 illustrates how a virtual keyboard is displayed and a key input is made in a conventional mobile terminal. As illustrated in Fig. 1, when the virtual keyboard is displayed on a small device such as a mobile terminal, the size of each key on the virtual keyboard is likely to be smaller than the size of a finger because of screen size constraints. Therefore, when a user makes a key input using the virtual keyboard, there is a problem in that the user's finger blocks the user's view of a key that the user intends to press and its adjacent keys and an incorrect input occurs. To solve such a problem, a mobile electronic device of Patent Literature 1 senses approach of a finger or stylus to a touch panel and makes an enlarged display of keys within a certain range. An enlarged key display made by the mobile electronic device of Patent Literature 1 is supplemented with reference to Fig. 2. Fig. 2 illustrates an aspect of an enlarged key display made by the mobile electronic device of Patent Literature 1, that is, an aspect of an enlarged key display when an intersection (referred to as a point B) of a touch panel and a virtual line extending from the tip of the stylus or finger in a direction perpendicular to the touch panel surface is present within a region in which key "K" is displayed, and a distance D from the tip of the stylus or finger to the touch panel is shorter than a predetermined distance. In this case, as illustrated in Fig. 2, a control unit of the mobile electronic device of Patent Literature 1 enlarges the display of key "K" and keys located adjacent to key "K" to change the virtual keyboard display so that a key input is made easier. Prior art similar to that disclosed in the patent literature is known from Patent Literature 2. This document discloses displaying a copy or magnification of a touch area that is hidden by a user's finger. Furthermore, Patent Literature 3 discloses calculating a finger coordinate close to a contact point or a proximity point by using a first centroid and a second centroid, the former being a centroid of a region having strong luminance values in a luminance distribution that is observed by light reception process for a user's finger, and the latter being a centroid of a region having weak luminance values in the luminance distribution. Patent Literature 4 discloses displaying on a screen a cursor at a position determined on the basis of a touched region that is a minimum rectangular including an area which a user's finger contacts actually. Patent Literature 5 discloses detecting user's handedness and controlling each transparency of two overlapped display layers in response to the detected handedness. Patent Literatures 3 and 5 also disclose calculating an angle of a user's finger to a reference coordinate axis on a screen. Patent Literature 6 is related to an augmented reality system and discloses setting a size, a display position, transparency, etc., of a display object that is an object for displaying information associated with a corresponding user.
The apparatus disclosed in Patent Literature 2 is referred to in the preamble of Claim 1.

### [PRIOR ART LITERATURE]

### [PATENT LITERATURE]

Patent Literature 1: Japanese Patent Application Laid Open No. 2012-94008
Patent Literature 2: WO 2004/051392 A2
Patent Literature 3: EP 2 166 435 A2
Patent Literature 4: US 2011/242038 A1
Patent Literature 5: US 2010/177121 A1
Patent Literature 6: EP 2 426 645 A1

### [SUMMARY OF THE INVENTION]

### [PROBLEMS TO BE SOLVED BY THE INVENTION]

Problems with an enlarged key display made by the mobile electronic device of Patent Literature 1 are described with reference to Fig. 3. Fig. 3 illustrates the problems with an enlarged key display made by the mobile electronic device of Patent Literature 1. As illustrated in Fig. 3, even after the mobile electronic device of Patent Literature 1 makes an enlarged display of a target key and its adjacent keys, target key "K" may be completely hidden behind the user's operation finger and out of view. In this case, as in the above case, the user's finger blocks the user's view of the key that the user intends to press and an incorrect input tends to occur. The cause of this is that the screen size of a small terminal device such as a mobile phone is very small and an enlarged key display in some degree is not sufficient for the target key display to become larger than the finger size. To solve this problem, if a key enlargement factor is increased to a level at which the target key is not hidden behind the finger, there is another problem in that the proportion of the enlarged keys to the entire screen becomes too large, other information that the user intends to view is also hidden behind the enlarged keys, and user convenience is impaired instead of enhanced. Accordingly, an object of the present invention is to provide a terminal device capable of making a key display with which a user makes an input easily.

### [MEANS TO SOLVE THE PROBLEMS]

In view of this object, the present invention provides a terminal device having the features of independent claim 1. A preferred embodiment of the invention is described in the dependent claims. The terminal device relating to the present invention includes at least a hover position detection unit, a target key identification unit, a user assistance display control unit, and a display.

The hover position detection unit measures a distribution of a physical quantity indicating a degree of approach of an operation finger to a touch panel, and detects a hover position from the distribution of the physical quantity. The target key identification unit identifies, as a target key, a key corresponding to a display region including coordinates of the hover position. The user assistance display control unit generates a display control signal indicating that an assistance display that represents the target key is to be displayed at a different position from a display position of the target key. The display makes a screen display in accordance with the display control signal.

### [EFFECTS OF THE INVENTION]

The terminal device of the present invention can make a key display with which a user makes an input easily.

### [BRIEF DESCRIPTION OF THE DRAWINGS]

Fig. 1 illustrates how a virtual keyboard is displayed and a key input is made in a conventional mobile terminal.
Fig. 2 illustrates an aspect of an enlarged key display made by a mobile electronic device of Patent Literature 1.

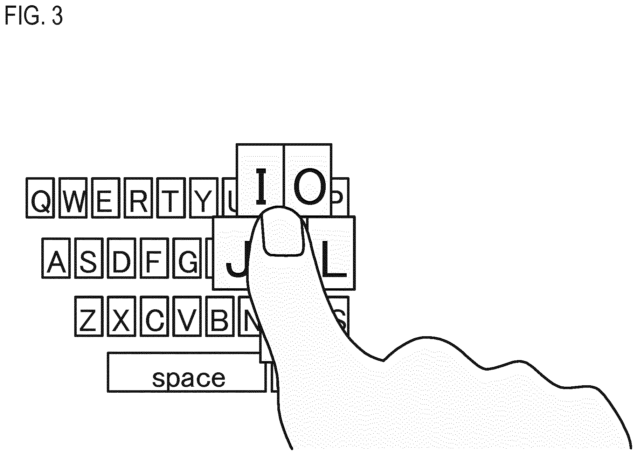

Fig. 3 illustrates problems with an enlarged key display made by the mobile electronic device of Patent Literature 1.
Fig. 4 illustrates an aspect of a key display made by a terminal device of the present invention.
Fig. 5 is a block diagram illustrating configurations of mobile terminals of first to seventh examples and an embodiment.
Fig. 6 is a flowchart illustrating operation of the mobile terminals of the first to seventh examples and the embodiment.
Fig. 7 is a block diagram illustrating a configuration of a hover position correction unit of the first example.
Fig. 8 is a flowchart illustrating operation of the hover position correction unit of the first example.
Fig. 9 illustrates the operation of the hover position correction unit of the first example.
Fig. 10 is a block diagram illustrating a configuration of a user assistance display control unit of the first example.
Fig. 11 is a flowchart illustrating operation of the user assistance display control unit of the first example.
Fig. 12 illustrates variations of an assistance display, with Fig. 12A illustrating a variation in which an assistance display is displayed at a position at which a target key is shifted to the upper side of the screen, Fig. 12B illustrating a variation in which an assistance display is displayed at a position at which the target key is shifted to the upper left of the screen, and Fig. 12C illustrating a variation in which an assistance display is displayed at a position at which the target key is shifted to the upper right of the screen.
Fig. 13 illustrates a variation of an assistance display.
Fig. 14 is a block diagram illustrating a configuration of a hover position correction unit of a second example.
Fig. 15 is a flowchart illustrating operation of the hover position correction unit of the second example.
Fig. 16 illustrates a relationship between a capacitance distribution and a correction amount.
Fig. 17 illustrates a relationship between a capacitance distribution and a correction amount.
Fig. 18 is a block diagram illustrating a configuration of a hover position correction unit of a third example.
Fig. 19 is a flowchart illustrating operation of the hover position correction unit of the third example.
Fig. 20 illustrates a correction amount and a correction direction when an operation finger is a thumb.
Fig. 21 illustrates a correction amount and a correction direction when an operation finger is a forefinger.
Fig. 22 illustrates a relationship of a capacitance distribution with a width of a finger and an axial direction of the finger.
Fig. 23 illustrates an example of processing for sensing a width of a finger and an axial direction of the finger from a capacitance distribution.
Fig. 24 is a block diagram illustrating a configuration of a hover position correction unit of the embodiment.
Fig. 25 is a flowchart illustrating operation of the hover position correction unit of the embodiment.
Fig. 26 illustrates a detection exclusion region stored in the hover position correction unit of the embodiment.
Fig. 27 is a block diagram illustrating a configuration of a user assistance display control unit of a fourth example.
Fig. 28 is a flowchart illustrating operation of the user assistance display control unit of the fourth example.
Fig. 29 illustrates an operation example of the user assistance display control unit of the fourth example.
Fig. 30 is a block diagram illustrating a configuration of a user assistance display control unit of a fifth example.
Fig. 31 is a flowchart illustrating operation of the user assistance display control unit of the fifth example.
Fig. 32 illustrates a relationship between a hover height and an enlargement factor.
Fig. 33 is a block diagram illustrating a configuration of a user assistance display control unit of a sixth example.
Fig. 34 is a flowchart illustrating operation of the user assistance display control unit of the sixth example.
Fig. 35 illustrates a relationship between a transparency and a movement speed (dwell time), with Fig. 35A illustrating a relationship between an operation finger movement speed and a transparency and Fig. 35B illustrating a relationship between operation finger dwell time and a transparency.
Fig. 36 is a block diagram illustrating a configuration of a user assistance display control unit of the seventh example.
Fig. 37 is a flowchart illustrating operation of the user assistance display control unit of the seventh example.
Fig. 38 illustrates a relationship between a capacitance distribution and an optimum display position of an assistance display.
Fig. 39 illustrates a relationship between a capacitance distribution and an optimum display position of an assistance display.

### [DETAILED DESCRIPTION OF THE EMBODIMENTS]

Seven examples and an embodiment of the present invention are described in detail below. Note that components having the same function are provided with the same numeral, and redundant description is omitted.

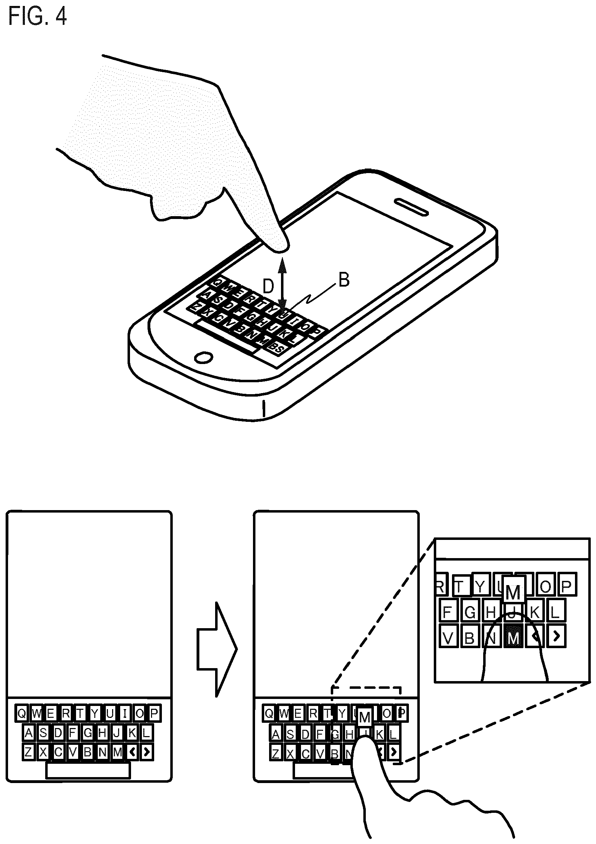

An overview of a user assistance display made by a terminal device of the present invention is described below with reference to Fig. 4. Fig. 4 illustrates an aspect of a user assistance display made by the terminal device of the present invention. As illustrated in Fig. 4, in the terminal device of the present invention, when the tip of a user's finger (stylus) approaches a touch panel and a distance D between the tip and the touch panel is smaller than or equal to a predetermined distance, and when an intersection (point B) of the touch panel surface and a line segment perpendicular to a touch panel surface extending from the tip of the user's finger (stylus) is present within a display region of a predetermined key (key "M" in Fig. 4), an assistance display (key "M") is displayed at a position shifted from an initial display position of the predetermined key (key "M") by a predetermined distance. The distance D and the point B can be measured by capacitance or an infrared amount on the touch panel surface, details of which will be described later. In the example in Fig. 4, key "M" is displayed at a position shifted to the upper side of the screen from the position at which key "M" is initially displayed. This allows the user to make a key input without causing the key that the user intends to press to be hidden behind the user's finger and become difficult to see, and it is therefore possible to prevent an incorrect key input.

### <Terminal Device>

Although Fig. 4 illustrates a mobile terminal, the present invention is applicable not only to mobile terminals, but also to any electronic devices (such as mobile terminals, tablet computers, PDAs, e-book terminals, digital audio players, and game machines) on which input operations can be performed through a touch panel. Therefore, a "terminal device" in the present specification refers to a general electronic device on which input operations can be performed through a touch panel. First to seventh examples and an embodiment below are described with a mobile terminal as an example of a terminal device.

### <Physical Information Indicating Degree of Approach of Operation Finger to Touch Panel>

In the present invention, when the tip of the user's operation finger approaches the touch panel and the distance D between the tip and the touch panel is smaller than or equal to a predetermined distance, an assistance display is made for a predetermined key. The distance D can be predicted from the maximum value of a physical quantity such as capacitance or an infrared amount. In the embodiment and examples below, examples with capacitance are described, but the use of capacitance is not necessarily required; capacitance may be replaced with any physical quantity, provided that approach of a finger can be sensed by the physical quantity.

### [FIRST EXAMPLE]

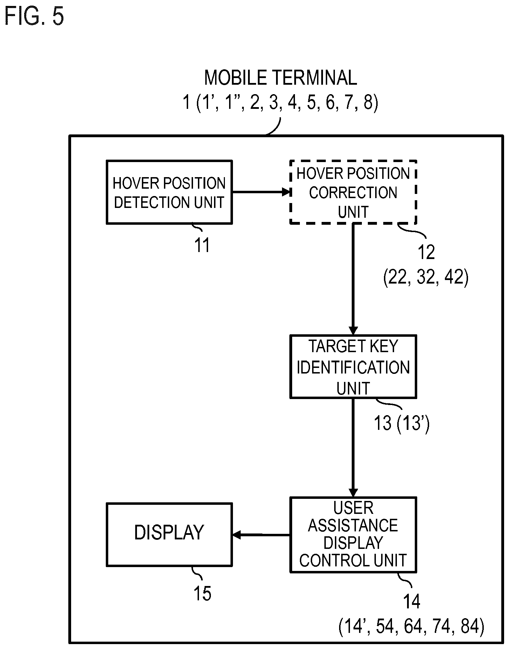

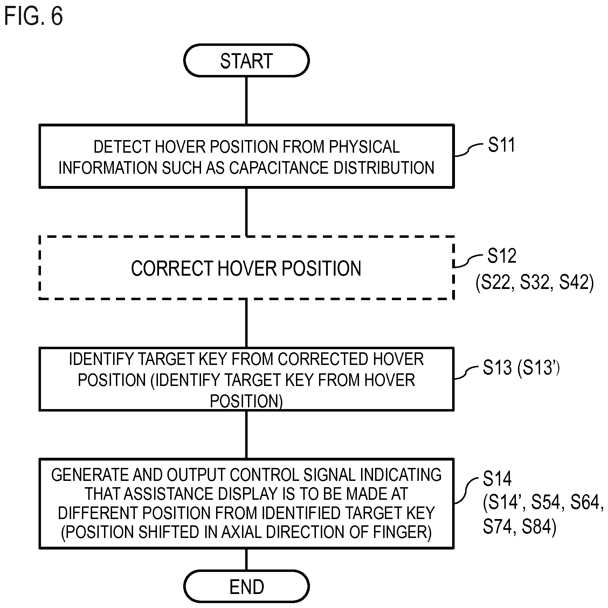

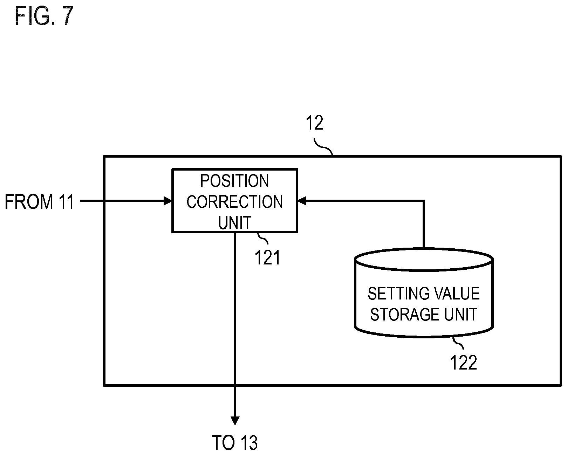

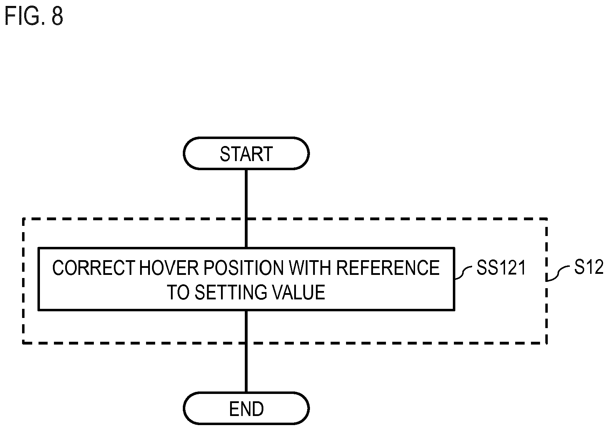

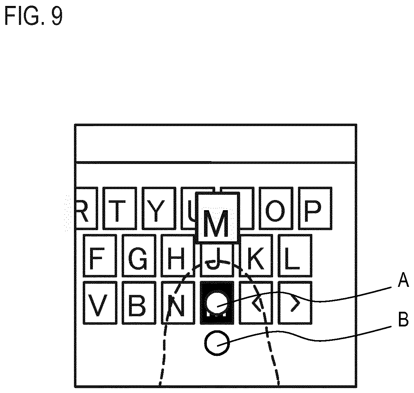

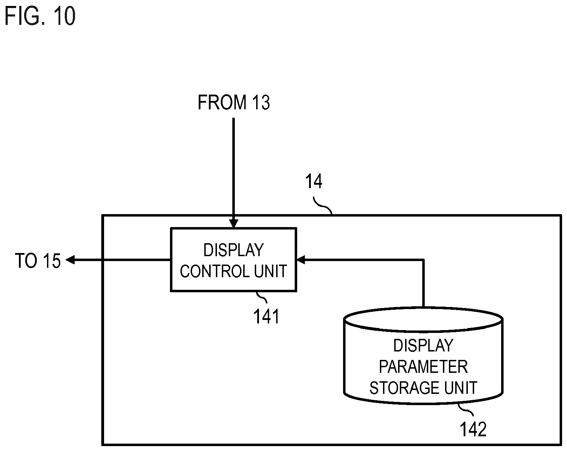

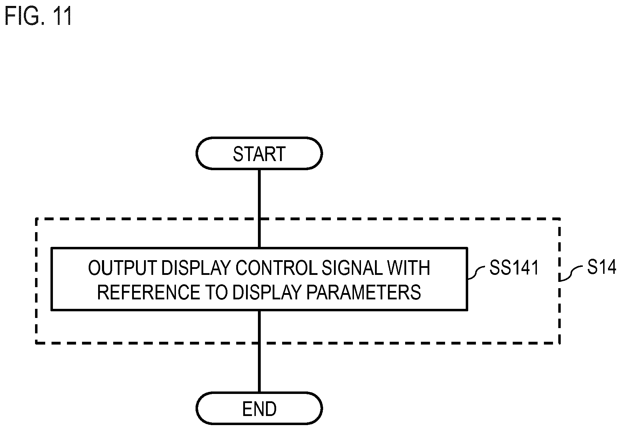

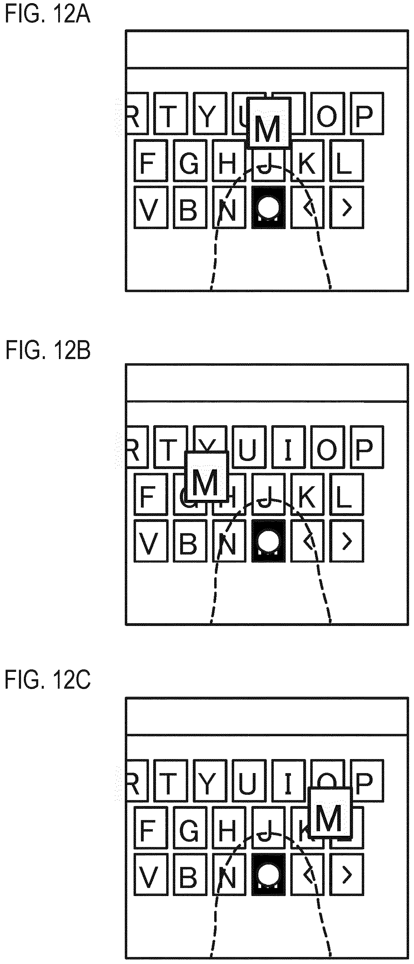

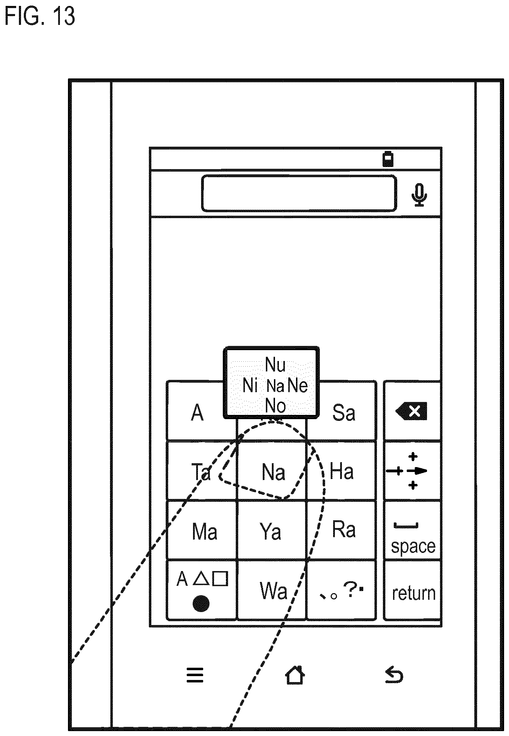

A mobile terminal 1 of the first example is described below with reference to Figs. 5 to 13. Fig. 5 is a block diagram illustrating configurations of mobile terminals of the first to seventh examples and the embodiment. Fig. 6 is a flowchart illustrating operation of the mobile terminals of the first to seventh examples and the embodiment. Fig. 7 is a block diagram illustrating a configuration of a hover position correction unit 12 of the present example. Fig. 8 is a flowchart illustrating operation of the hover position correction unit 12 of the present example. Fig. 9 illustrates the operation of the hover position correction unit 12 of the present example. Fig. 10 is a block diagram illustrating a configuration of a user assistance display control unit 14 of the present example. Fig. 11 is a flowchart illustrating operation of the user assistance display control unit 14 of the present example. Figs. 12 and 13 illustrate variations of an assistance display.

As illustrated in Fig. 5, the mobile terminal 1 of the present example includes a hover position detection unit 11, the hover position correction unit 12, a target key identification unit 13, the user assistance display control unit 14, and a display 15. The mobile terminals of the present example and the other embodiment or examples, which will be described later, include other components such as an antenna, transmitting unit, receiving unit, speaker, receiver, data processing circuit, power supply unit, and UIM, which are included in an ordinary mobile terminal; however, these components are not described and illustrated because the components are not related to the description of the present invention.

### <Hover Position Detection Unit 11>

The hover position detection unit 11 measures a distribution of a physical quantity indicating a degree of approach of the operation finger to the touch panel, and detects a position on the touch panel at which the physical quantity reaches the maximum value (referred to below as a hover position) (S11). For example, the hover position detection unit 11 includes a capacitance sensor and measures capacitance on the touch panel surface at a predetermined pitch, thereby acquiring a capacitance distribution and detecting a point at which capacitance is maximized as a hover position (point B). With this method, even when a finger position is far from the touch panel, a point at which capacitance is maximized is always detected as a hover position. Thus, a threshold value may be predetermined, so that a point at which capacitance is maximized may be detected as a hover position only when the maximum value of capacitance exceeds the threshold value. The hover position detection unit 11 may measure a distribution of a physical quantity (such as infrared) other than capacitance and sense a degree of approach of the operation finger to the touch panel.

### <Hover Position Correction Unit 12>

As illustrated in Fig. 9, there is a slight deviation between the hover position detected by the hover position detection unit 11 (point B) and the point that the user intends to press (point A). The cause of this is that there is a slight difference between a portion of a finger that initially makes contact when a person intends to press a button or touch panel with his or her fingertip and a portion of the finger that generates a peak position in a distribution of a physical quantity indicating a degree of approach of the operation finger over the touch panel immediately before the button or touch panel is pressed. Specifically, the portion of the finger that initially makes contact with the touch panel or the like is an area near the fingertip in the finger pulp region, and the portion of the finger that generates a peak position in a distribution of a physical quantity is slightly shifted to the base side of the finger in the finger pulp region from the portion of the finger that initially makes contact with the touch panel or the like. Therefore, as illustrated in Fig. 9, the point B is often at a position shifted one to a few millimeters from the point A in the direction of the lower side of the screen. Thus, the hover position correction unit 12 corrects the hover position detected by the hover position detection unit 11 (point B) by a predetermined distance and outputs a corrected hover position (point A) (S12). More specifically, as illustrated in Fig. 7, the hover position correction unit 12 includes a position correction unit 121 and a setting value storage unit 122. The setting value storage unit 122 stores a coordinate correction amount. For example, the coordinate correction amount can be specified in pixels, and may be 12 pixels or the like. The coordinate correction amount stored in the setting value storage unit 122 may be set by the manufacturer before factory shipment of the terminal, or may be updated by the user as appropriate such that the coordinate correction amount is calibrated on an as-needed basis until the coordinate correction amount fits the user's operational feeling. The position correction unit 121 corrects the hover position (point B) by using the coordinate correction amount, and outputs a corrected hover position (point A) (SS121).

### <Target Key Identification Unit 13>

The target key identification unit 13 performs a comparison between coordinates of a corrected hover position (point A) and a display coordinate region of each key, and identifies, as a target key, a key corresponding to a display region including the coordinates of the corrected hover position (point A) (S13).

### <User Assistance Display Control Unit 14>

The user assistance display control unit 14 generates and outputs a display control signal indicating that an assistance display that represents the target key is to be displayed at a different position from a display position of the target key (S14). The display control signal has only to indicate, for example, that the assistance display is to be displayed at a position at which the target key is shifted to the upper side of the screen as illustrated in Fig. 12A. This is not a limitation; the assistance display may be displayed at a position at which the target key is shifted to the upper left of the screen as illustrated in Fig. 12B, or the assistance display may be displayed at a position at which the target key is shifted to the upper right of the screen as illustrated in Fig. 12C. In consideration of a positional relationship between the hand and screen, the shift direction is preferably a direction of the upper side of the screen. However, for example, when the operation finger is the right thumb, the assistance display is easier for the user to see when the assistance display is displayed at a position at which the target key is shifted to the upper left of the screen as in Fig. 12B, because the first joint of the right thumb may block the line of sight. Conversely, when the operation finger is the left thumb, the assistance display is easier for the user to see when the assistance display is displayed at a position at which the target key is shifted to the upper right of the screen as in Fig. 12C, because the first joint of the left thumb may block the line of sight. The user assistance display control unit 14 may generate a display control signal not only for an assistance display that displays only the identified target key, but also for an assistance display that displays all key candidates included in the target key as illustrated in Fig. 13. In the example in Fig. 13, only the representative keys are displayed, which accept inputs of key candidates in individual rows such as the rows of "A", "Ka", "Sa", "Ta", and "Na". For example, when the representative key of the row of "Na" is a target key, the entire assistance display for "Na", "Ni", "Nu", "Ne", and "No", which are key candidates included in the row of "Na", is displayed at a position shifted to the upper side; the "Ni", "Nu", "Ne", and "No" keys are displayed in the left, right, upper, and lower directions of the "Na" key with the "Na" key at the center. The assistance display is displayed at a different position from the target key, and may also be displayed to be larger than the target key, displayed in a changed color, or highlighted. Therefore, the user assistance display control unit 14 generates a display control signal that indicates display position coordinates of the assistance display, an enlargement factor, whether a color change is to be made, specification of a new color, whether highlighting is to be provided, and the like; in addition, when the target key includes a plurality of key candidates, the display control signal indicates that the assistance display including all key candidates is to be displayed. Specifically, as illustrated in Fig. 10, the user assistance display control unit 14 includes a display control unit 141 and a display parameter storage unit 142. The display parameter storage unit 142 stores display parameters (display position coordinates of the assistance display, an enlargement factor, whether a color change is to be made, specification of a new color, whether highlighting is to be provided, the contents of the assistance display when a plurality of key candidates are included, and the like). The display parameters stored in the display parameter storage unit 142 may be set by the manufacturer before factory shipment of the terminal, or may be updated by the user as appropriate such that the contents of the assistance display can be adapted to the user's preference. The display control unit 141 generates and outputs a display control signal with reference to the display parameters stored in the display parameter storage unit 142 (SS141).

### <Display 15>

The display 15 makes a screen display in accordance with the display control signal output by the user assistance display control unit 14.

### <First Modification>

Although it is desirable to provide the hover position correction unit 12 to increase user friendliness, the hover position correction unit 12 is not necessarily required. Thus, a mobile terminal 1' without the hover position correction unit 12 can also be implemented as a modification of the present example. As illustrated in Fig. 5, the mobile terminal 1' of the present modification includes the hover position detection unit 11, a target key identification unit 13', the user assistance display control unit 14, and the display 15.

In this case, the hover position detection unit 11 measures a distribution of a physical quantity indicating a degree of approach of the operation finger to the touch panel, and detects a position on the touch panel at which the physical quantity reaches the maximum value (hover position) (S11), and the target key identification unit 13' identifies, as a target key, a key corresponding to a display region including coordinates of the hover position (point B) (S13'). The user assistance display control unit 14 generates a display control signal indicating that an assistance display that represents the target key is to be displayed at a different position from a display position of the target key (S14). The display 15 makes a screen display in accordance with the display control signal.

### <Second Modification>

In the first example and the first modification, the user assistance display control unit 14 generates a display control signal indicating that an assistance display is to be displayed in accordance with display position coordinates of the assistance display that are preset as a display parameter. However, this is not a limitation; for example, an assistance display may be displayed at a position shifted from an initial display position of the target key in an axial direction of the finger by a predetermined distance. To implement such a function, as a second modification, which is a further modification to the first modification, a mobile terminal 1" is described in which the user assistance display control unit 14 is replaced with a user assistance display control unit 14'. The mobile terminal 1" of the present modification includes the hover position detection unit 11, the target key identification unit 13', the user assistance display control unit 14', and the display 15. The user assistance display control unit 14' of the present modification acquires a distribution of a physical quantity indicating a degree of approach of the operation finger to the touch panel, predicts an axial direction of the operation finger from the distribution, and generates a display control signal indicating that an assistance display is to be displayed at a position at which a display position of a target key is shifted in a shift direction by a predetermined distance, the shift direction being the predicted axial direction of the operation finger (S14'). A specific method for predicting an axial direction of the operation finger from a distribution of a physical quantity indicating a degree of approach of the operation finger to the touch panel will be described in detail in a third example.

Thus, in the mobile terminal 1 of the present example, the mobile terminal 1' of the first modification, and the mobile terminal 1" of the second modification, the user assistance display control unit 14 (14') generates and outputs a display control signal indicating that an assistance display that represents an identified target key is to be displayed at a different position from a display position of the target key, and it is therefore possible to prevent a key that the user intends to press from being hidden behind the user's finger and out of view. It is also possible to make a key display with which a user makes an input easily.

### [SECOND EXAMPLE]

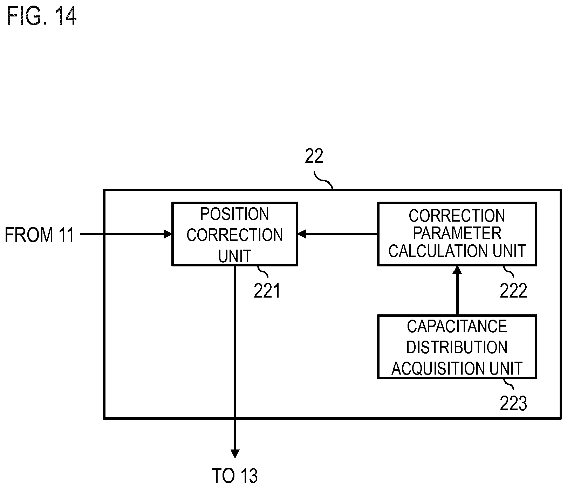

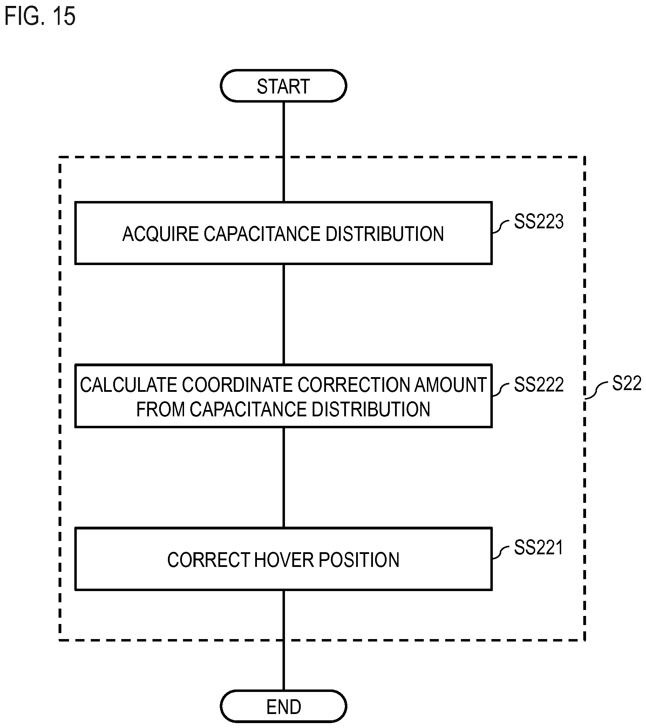

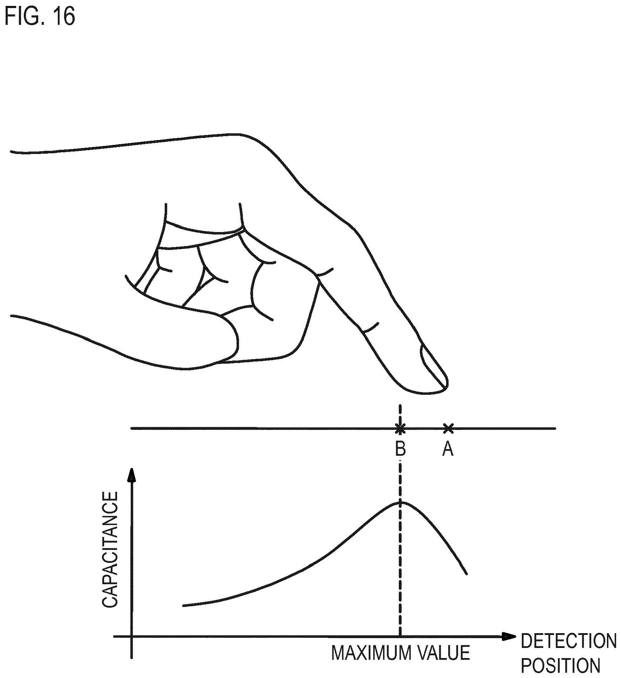

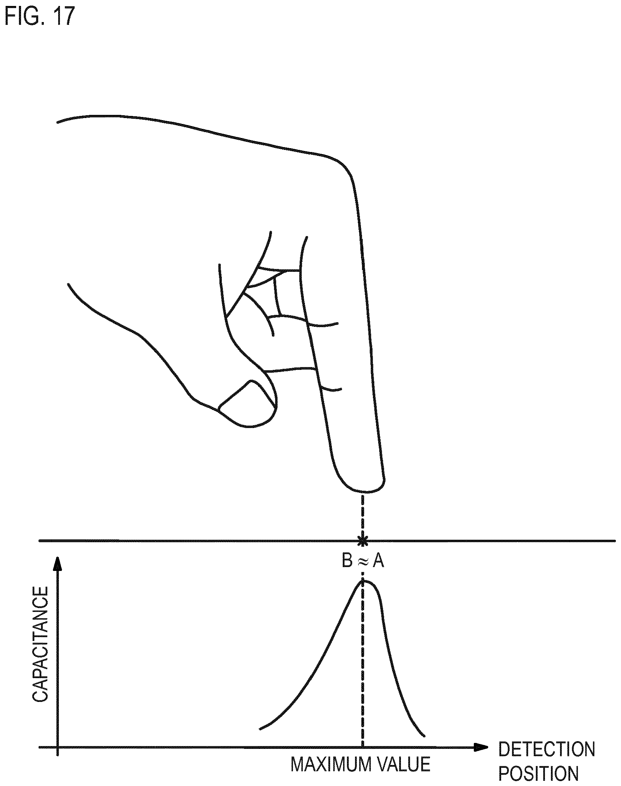

A mobile terminal 2 of a second example is described below with reference to Figs. 5 and 14 to 17. Fig. 14 is a block diagram illustrating a configuration of a hover position correction unit 22 of the present example. Fig. 15 is a flowchart illustrating operation of the hover position correction unit 22 of the present example. Figs. 16 and 17 illustrate a relationship between a capacitance distribution and a correction amount.

As illustrated in Fig. 5, the mobile terminal 2 of the present example includes the hover position detection unit 11, the hover position correction unit 22, the target key identification unit 13, the user assistance display control unit 14, and the display 15. The hover position detection unit 11, the target key identification unit 13, the user assistance display control unit 14, and the display 15 are exactly the same as those components with the same numerals in the mobile terminal 1 of the first example, and the description is omitted. The hover position correction unit 22 that performs different processing from that in the mobile terminal 1 of the first example is described below.

### <Hover Position Correction Unit 22>

As described in the first example, there is a slight deviation between the hover position detected by the hover position detection unit 11 (point B) and the point that the user intends to press (point A). This deviation is caused by the physical form of the finger. The deviation changes depending on the angle of the operation finger with respect to the touch panel. For example, as in Fig. 16, when an angle between the axial direction of the user's operation finger and the touch panel surface is small, there is a deviation between the point A and the point B. On the other hand, as in Fig. 17, when an angle between the axial direction of the user's operation finger and the touch panel surface is closer to perpendicular, a deviation between the point A and the point B is small. The angle between the axial direction of the user's operation finger and the touch panel surface can be predicted, for example, as illustrated in Figs. 16 and 17, by focusing on the form of a distribution of a physical quantity, such as capacitance or infrared, indicating a degree of approach of the operation finger to the touch panel. For example, as in Fig. 16, when the angle between the axial direction of the user's operation finger and the touch panel surface is small, a distribution of a physical quantity forms a gentle curve that is convex upward with the maximum value at the center. In contrast, as in Fig. 17, when the angle between the axial direction of the user's operation finger and the touch panel surface is closer to perpendicular, a distribution of a physical quantity forms a steep curve that is convex upward with the maximum value at the center. Therefore, the hover position correction unit 22 of the present example acquires a distribution of a physical quantity indicating a degree of approach of the operation finger to the touch panel, acquires a differential value of the distribution, corrects a hover position (point B) using a coordinate correction amount predetermined in association with the differential value, and outputs a corrected hover position (point A) (S22). Specifically, for example, as illustrated in Fig. 14, the hover position correction unit 22 includes a position correction unit 221, a correction parameter calculation unit 222, and a capacitance distribution acquisition unit 223. The capacitance distribution acquisition unit 223 acquires a capacitance distribution (SS223). The correction parameter calculation unit 222 calculates a coordinate correction amount from the capacitance distribution (SS222). For example, the correction parameter calculation unit 222 may prestore a pair of a differential value and a coordinate correction amount as a table, compute a differential value of a capacitance distribution, and calculate a coordinate correction amount with reference to the differential value and table. The position correction unit 221 corrects a hover position (point B) using the coordinate correction amount, and outputs a corrected hover position (point A) (SS221).

Thus, in the mobile terminal 2 of the present example, in addition to the effects of the first example, the hover position correction unit 22 corrects a hover position in consideration of an angle between the axial direction of the user's operation finger and the touch panel surface, and it is therefore possible to identify, with higher accuracy, a key that the user intends to press.

### [THIRD EXAMPLE]

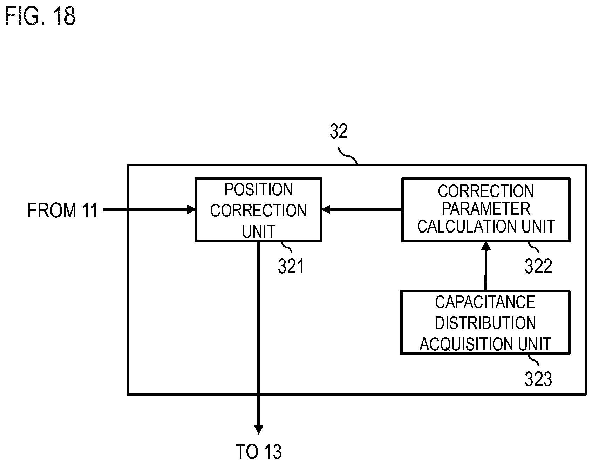

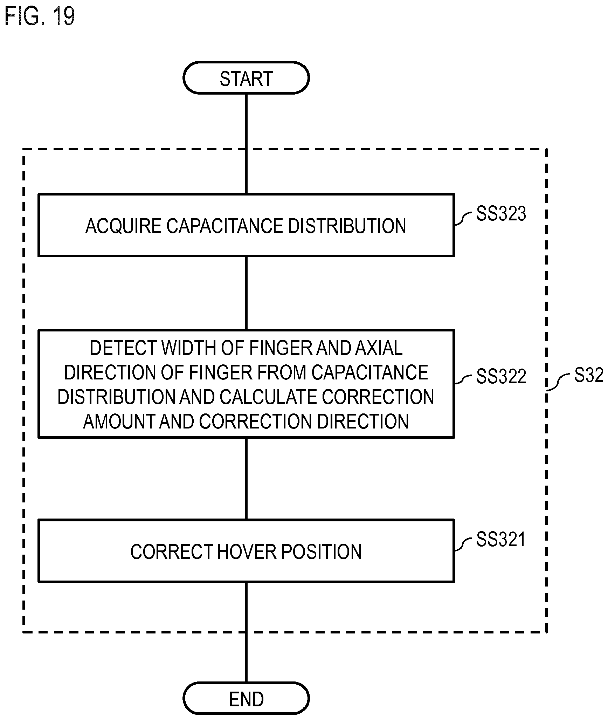

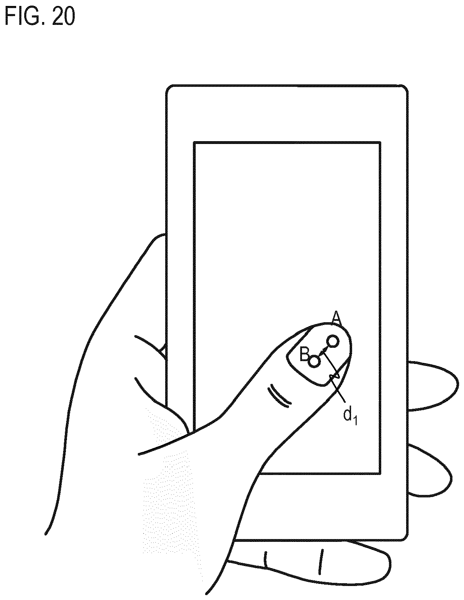

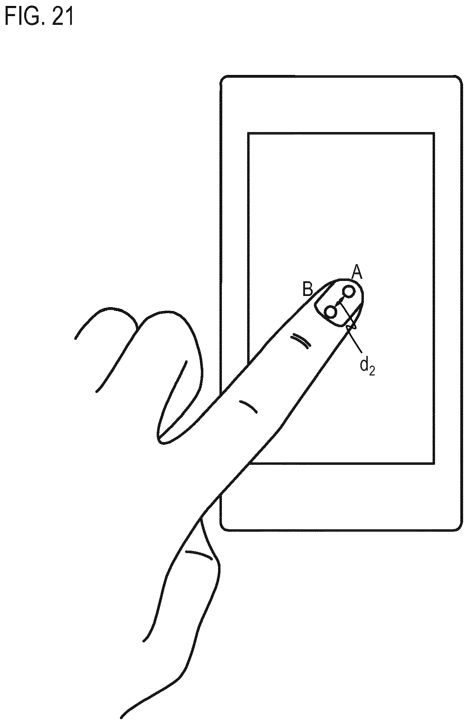

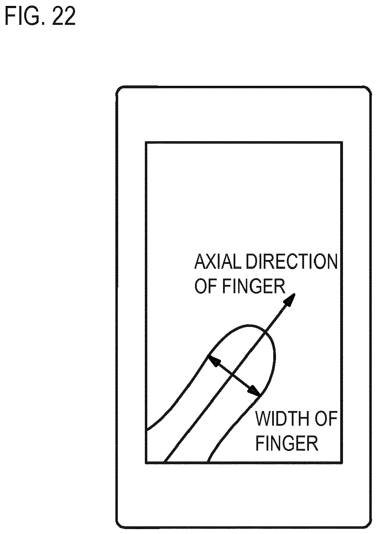

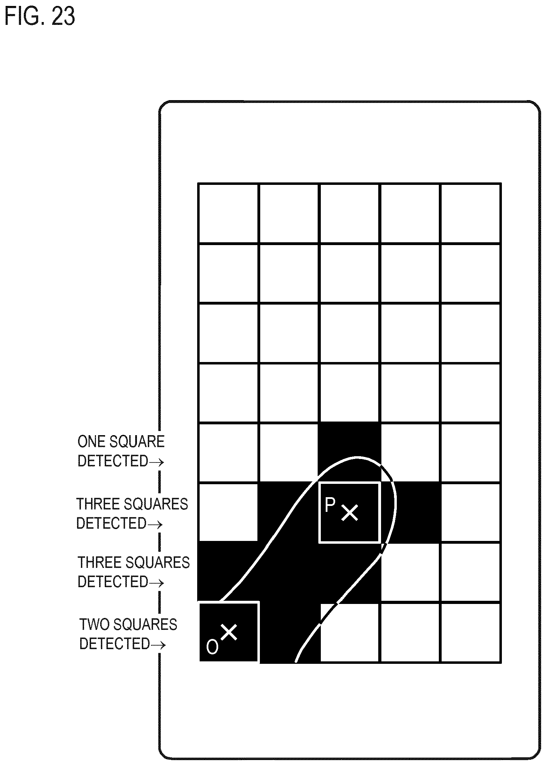

A mobile terminal 3 of a third example is described below with reference to Figs. 5 and 18 to 23. Fig. 18 is a block diagram illustrating a configuration of a hover position correction unit 32 of the present example. Fig. 19 is a flowchart illustrating operation of the hover position correction unit 32 of the present example. Fig. 20 illustrates a correction amount and a correction direction when an operation finger is a thumb. Fig. 21 illustrates a correction amount and a correction direction when an operation finger is a forefinger. Fig. 22 illustrates a relationship of a capacitance distribution with a width of a finger and an axial direction of the finger. Fig. 23 illustrates an example of processing for sensing a width of a finger and an axial direction of the finger from a capacitance distribution.

As illustrated in Fig. 5, the mobile terminal 3 of the present example includes the hover position detection unit 11, the hover position correction unit 32, the target key identification unit 13, the user assistance display control unit 14, and the display 15. The hover position detection unit 11, the target key identification unit 13, the user assistance display control unit 14, and the display 15 are exactly the same as those components with the same numerals in the mobile terminal 1 of the first example, and the description is omitted. The hover position correction unit 32 that performs different processing from that in the mobile terminal 1 of the first example is described below.

### <Hover Position Correction Unit 32>

As described in the first example, there is a slight deviation between the hover position detected by the hover position detection unit 11 (point B) and the point that the user intends to press (point A). This deviation is caused by the physical form of the finger. The deviation is affected not only by an angle of the finger with respect to the touch panel as in the second example, but also by the finger size. For example, when the operation finger is a large finger such as a thumb, a deviation amount is proportionally larger. When the operation finger is smaller, a deviation amount is proportionally smaller. Therefore, in a precise sense, a deviation amount when a thumb is the operation finger as in Fig. 20 is different from a deviation amount when a forefinger is the operation finger as in Fig. 21; a deviation amount d1 when a thumb is the operation finger is larger than a deviation amount d2 when a forefinger is the operation finger. A direction in which a deviation occurs is, in a precise sense, an axial direction of the finger. Therefore, when a forefinger faces in the direction of the upper right of the screen as in Fig. 21, a direction in which a deviation occurs is also the direction of the upper right of the screen. As illustrated in Fig. 22, the size of the operation finger (width of the finger) and the direction of the operation finger (axial direction of the finger) can be predicted by focusing on the form of a distribution of a physical quantity, such as capacitance or infrared, indicating a degree of approach of the operation finger to the touch panel. Specifically, for example, as illustrated in Fig. 23, the touch panel is divided into several square regions (8 squares high by 5 squares wide, that is, 40 squares in the example in Fig. 23). Square regions in which an intra-square region average value of a physical quantity such as capacitance exceeds a predetermined value are detected (black square regions in Fig. 23). In these detected square regions, the axial direction of the finger can be obtained from an angle formed by a line segment connecting the central coordinates of the square region that has the largest intra-region average value (point P in Fig. 23) and the central coordinates of the square region that has the smallest intra-region average value (point O in Fig. 23). Next, the number of square regions is counted horizontally for each row, the square regions having been detected as those in which an intra-square region average value of a physical quantity such as capacitance exceeds the predetermined value (black square regions in Fig. 23). In the example in Fig. 23, one square, three squares, three squares, and two squares are detected sequentially in the fifth row from the top and the lower rows. The maximum value of the number of squares counted for each row can be handled as a representation of the width of the finger (size of the finger). More precisely, assuming that the above angle provided for the axial direction of the finger (angle formed with respect to the lateral direction of the screen) is θ, the maximum value of the number of squares counted for each row is multiplied by sinθ, and a resultant value may be handled as representing the width of the finger (size of the finger). In the example in Fig. 23, the angle formed by a line segment OP with respect to the lateral direction of the screen is 45 degrees and the maximum value of the number of squares counted for each row is 3, and therefore 3 × sin45 ≈ 2.12 can be a value representing the size of the finger. Accordingly, the hover position correction unit 32 of the present example acquires a distribution of a physical quantity indicating a degree of approach of the operation finger to the touch panel, predicts a size of the operation finger and an axial direction of the operation finger from the distribution, corrects a hover position (point B) using a coordinate correction amount predetermined based on the predicted size of the operation finger and a correction direction determined by the axial direction of the operation finger, and outputs a corrected hover position (point A) (S32). Specifically, for example, as illustrated in Fig. 18, the hover position correction unit 32 includes a position correction unit 321, a correction parameter calculation unit 322, and a capacitance distribution acquisition unit 323. The capacitance distribution acquisition unit 323 acquires a capacitance distribution (SS323). The correction parameter calculation unit 322 calculates a coordinate correction amount and a correction direction from the capacitance distribution (SS322). For example, the correction parameter calculation unit 322 prestores a pair of a width of the finger and a coordinate correction amount as a table, and calculates a coordinate correction amount with reference to, for example, the width of the finger calculated by the above method and the table. The correction parameter calculation unit 322 handles, for example, the axial direction of the finger calculated by the above method as a correction direction without modification. The position correction unit 321 corrects a hover position (point B) using the coordinate correction amount and correction direction, and outputs a corrected hover position (point A) (SS321).

Thus, in the mobile terminal 3 of the present example, in addition to the effects of the first example, the hover position correction unit 32 corrects a hover position in consideration of a size of the user's operation finger and an axial direction of the finger, and it is therefore possible to identify, with higher accuracy, a key that the user intends to press.

### [EMBODIMENT]

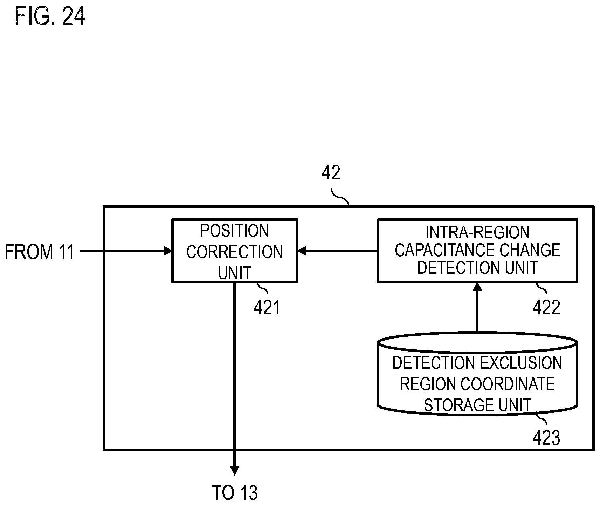

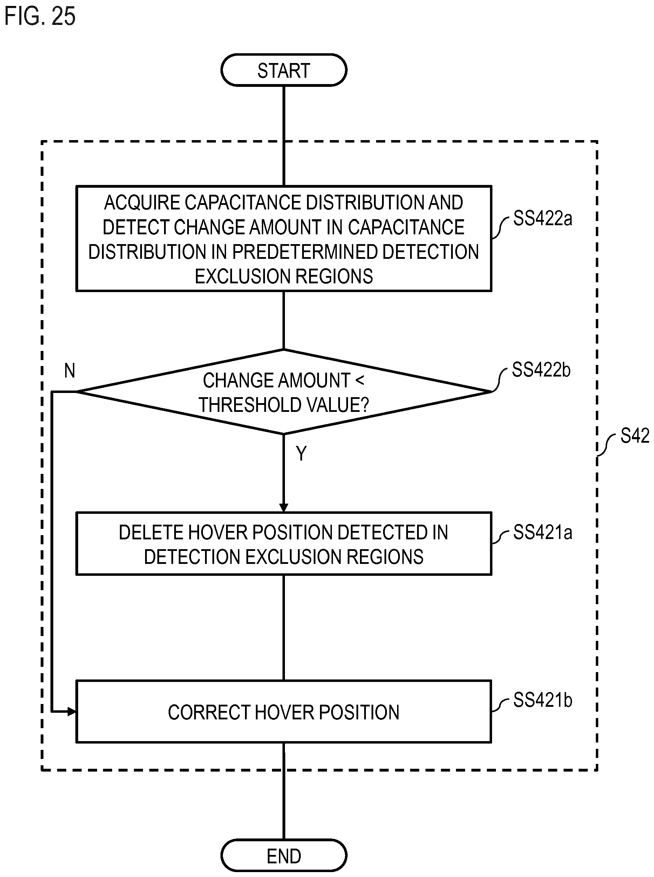

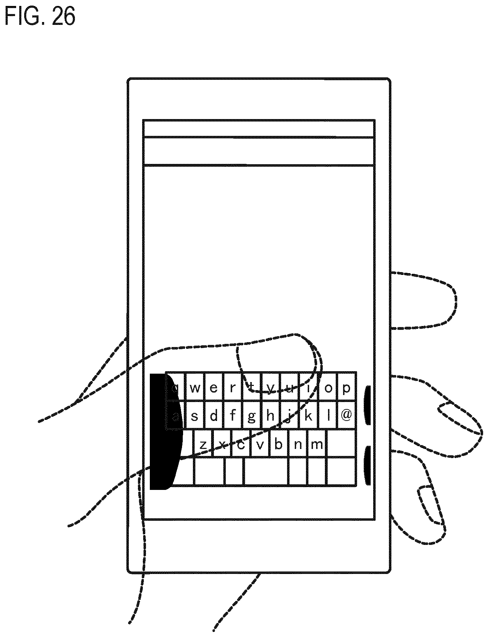

A mobile terminal 4 of an embodiment is described below with reference to Figs. 5 and 24 to 26. Fig. 24 is a block diagram illustrating a configuration of a hover position correction unit 42 of the present embodiment. Fig. 25 is a flowchart illustrating operation of the hover position correction unit 42 of the present embodiment. Fig. 26 illustrates a detection exclusion region stored in the hover position correction unit 42 of the present embodiment.

As illustrated in Fig. 5, the mobile terminal 4 of the present embodiment includes the hover position detection unit 11, the hover position correction unit 42, the target key identification unit 13, the user assistance display control unit 14, and the display 15. The hover position detection unit 11, the target key identification unit 13, the user assistance display control unit 14, and the display 15 are exactly the same as those components with the same numerals in the mobile terminal 1 of the first example, and the description is omitted. The hover position correction unit 42 that performs different processing from that in the mobile terminal 1 of the first example is described below.

### <Hover Position Correction Unit 42>

For a small terminal device such as a mobile terminal, a finger may always approach a region with a touch panel depending on how the user grasps the terminal device. For example, as in Fig. 26, when the user grasps a mobile terminal with his or her left hand, fingers may always approach touch panel regions shown in black near the left thumb, ring finger, and little finger. These regions that fingers always approach are not actually hover positions, but may be falsely recognized as hover positions. To prevent false recognition, for example, leftmost and rightmost screen regions with a predetermined width are set as detection exclusion regions, and a focus is placed on a change in a distribution of a physical quantity indicating a degree of approach of a finger in the detection exclusion regions. In the detection exclusion regions, if a change amount in a distribution of a physical quantity is not large, it may be assumed that the physical quantity detected in the detection exclusion regions does not mean the approach of the operation finger, but means the approach of any of the grasping fingers. Therefore, the hover position correction unit 42 of the present embodiment acquires a change amount in a distribution of a physical quantity indicating a degree of approach of a finger in predetermined detection exclusion regions, and deletes a hover position detected in the detection exclusion regions if the change amount in the distribution of the physical quantity is less than a predetermined threshold value (S42). Specifically, for example, as illustrated in Fig. 24, the hover position correction unit 42 includes a position correction unit 421, an intra-region capacitance change detection unit 422, and a detection exclusion region coordinate storage unit 423. The detection exclusion region coordinate storage unit 423 prestores, for example, leftmost and rightmost screen regions with a predetermined width as detection exclusion region coordinates. The intra-region capacitance change detection unit 422 acquires a capacitance distribution, and detects a change amount in the acquired capacitance distribution in the detection exclusion regions with reference to the detection exclusion region coordinates stored in the detection exclusion region coordinate storage unit 423 (SS422a). If the change amount in the capacitance distribution in the detection exclusion regions is less than a predetermined threshold value (SS422b: Y), and if a hover position is detected in the detection exclusion regions, the position correction unit 421 deletes the detected hover position (SS421a). On the other hand, if the change amount in the capacitance distribution in the detection exclusion regions is greater than or equal to the predetermined threshold value (SS422b: N), the position correction unit 421 corrects a hover position (point B) using the predetermined coordinate correction amount or correction direction, and outputs a corrected hover position (point A), as in the position correction units of the first to third examples (SS421b).

Thus, in the mobile terminal 4 of the present embodiment, in addition to the effects of the first example, the hover position correction unit 42 deletes or corrects a hover position in consideration of detection exclusion regions, and it is therefore possible to prevent false recognition of a point that is not actually a hover position.

### [FOURTH EXAMPLE]

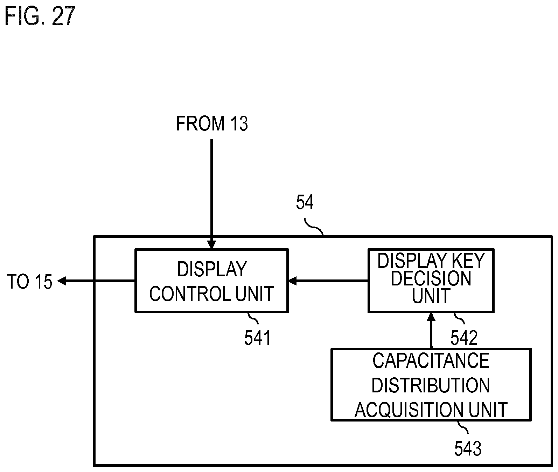

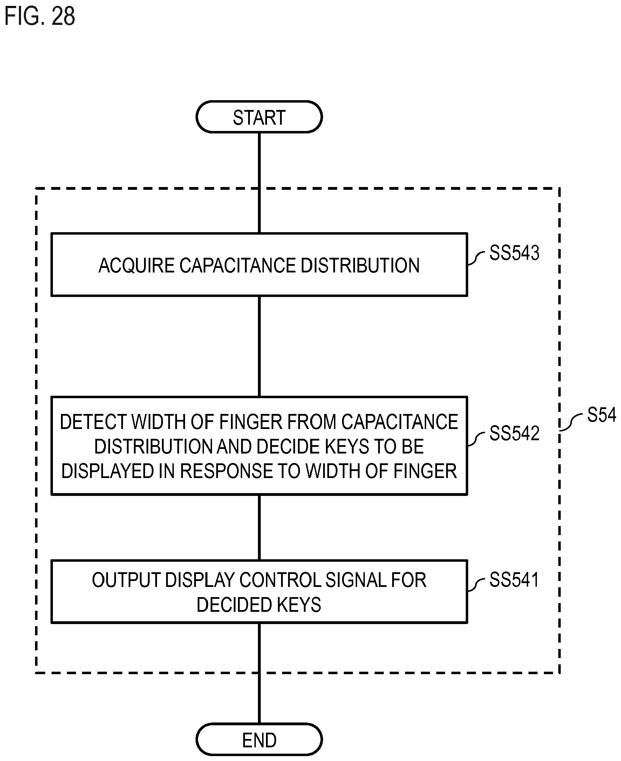

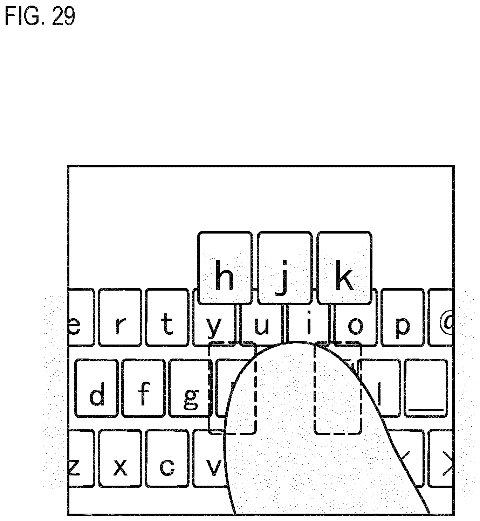

A mobile terminal 5 of a fourth example is described below with reference to Figs. 5 and 27 to 29. Fig. 27 is a block diagram illustrating a configuration of a user assistance display control unit 54 of the present example. Fig. 28 is a flowchart illustrating operation of the user assistance display control unit 54 of the present example. Fig. 29 illustrates an operation example of the user assistance display control unit 54 of the present example.

As illustrated in Fig. 5, the mobile terminal 5 of the present example includes the hover position detection unit 11, the hover position correction unit 12, the target key identification unit 13, the user assistance display control unit 54, and the display 15. The hover position detection unit 11, the hover position correction unit 12, the target key identification unit 13, and the display 15 are exactly the same as those components with the same numerals in the mobile terminal 1 of the first example, and the description is omitted. The user assistance display control unit 54 that performs different processing from that in the mobile terminal 1 of the first example is described below.

### <User Assistance Display Control Unit 54>

As the user's operation finger is larger (a mobile terminal is smaller), the number of keys hidden behind the user's finger increases. Therefore, when the user's operation finger is large as compared with the terminal, the keys on the left, right, upper, and lower sides of a target key are hidden behind the user's finger even when only the target key is included in an assistance display, and the user may find it difficult to make an input. In this case, for example, as illustrated in Fig. 29, keys such as the keys on the left and right sides of the target key are also included in the assistance display depending on the size of the user's finger, and thereby the user may be less likely to find it difficult to make an input. Therefore, the user assistance display control unit 54 of the present example acquires a distribution of a physical quantity, such as capacitance or infrared, indicating a degree of approach of the operation finger to the touch panel, detects a size of the finger (width of the finger) from the distribution of the physical quantity, decides an assistance display in response to the number of display keys predetermined depending on the detected size of the finger (width of the finger), and generates a display control signal indicating that the assistance display is to be displayed (S54). Specifically, as illustrated in Fig. 27, the user assistance display control unit 54 includes a display control unit 541, a display key decision unit 542, and a capacitance distribution acquisition unit 543. The capacitance distribution acquisition unit 543 acquires a capacitance distribution (SS543). The display key decision unit 542 detects a size of the finger (width of the finger) from the acquired capacitance distribution, and decides an assistance display in response to the number of display keys predetermined depending on the detected size of the finger (width of the finger) (SS542). The specific method for detecting a size of the finger (width of the finger) from a capacitance distribution has already been described. The display control unit 541 generates and outputs a display control signal indicating that the decided assistance display is to be displayed (SS541).

Thus, in the mobile terminal 5 of the present example, in addition to the effects of the first example, the user assistance display control unit 54 adjusts the number of display keys and decides an assistance display in consideration of a size of the user's finger, and it is therefore possible to make a key display with which the user makes an input more easily.

### [FIFTH EXAMPLE]

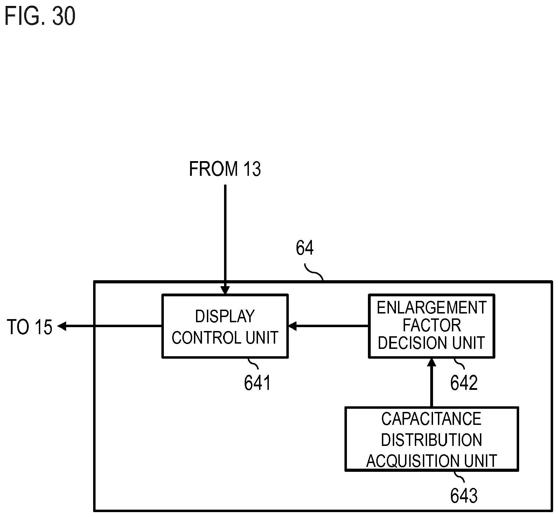

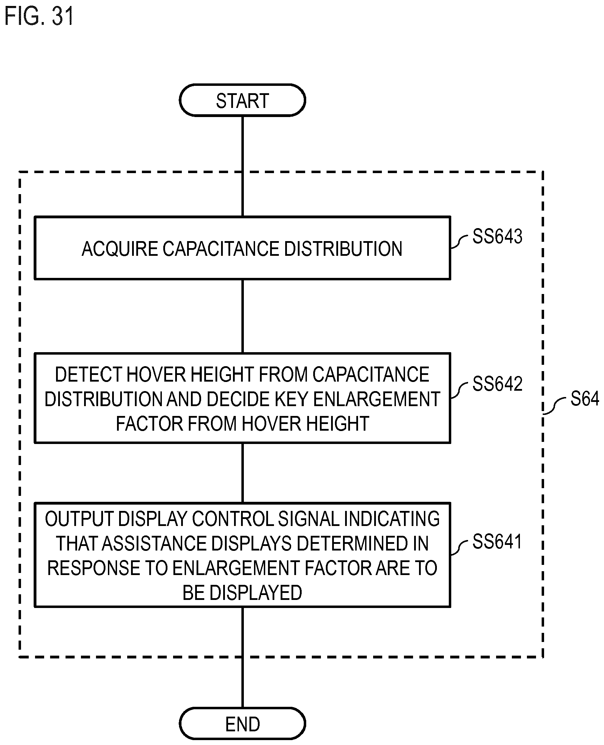

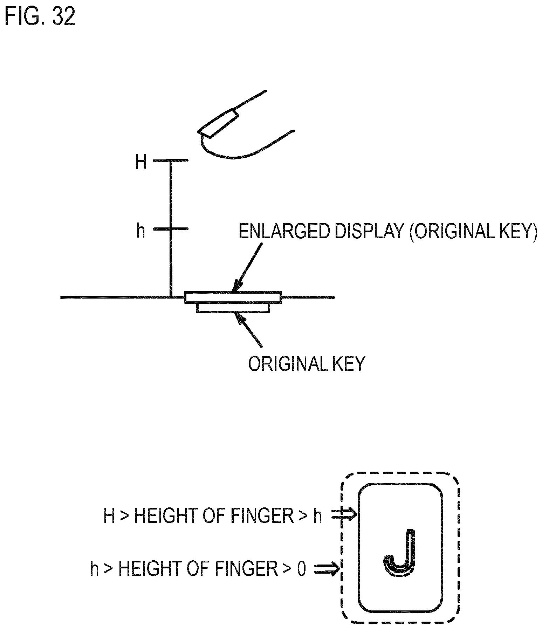

A mobile terminal 6 of a fifth example is described below with reference to Figs. 5 and 30 to 32. Fig. 30 is a block diagram illustrating a configuration of a user assistance display control unit 64 of the present example. Fig. 31 is a flowchart illustrating operation of the user assistance display control unit 64 of the present example. Fig. 32 illustrates a relationship between a hover height and an enlargement factor.

As illustrated in Fig. 5, the mobile terminal 6 of the present example includes the hover position detection unit 11, the hover position correction unit 12, the target key identification unit 13, the user assistance display control unit 64, and the display 15. The hover position detection unit 11, the hover position correction unit 12, the target key identification unit 13, and the display 15 are exactly the same as those components with the same numerals in the mobile terminal 1 of the first example, and the description is omitted. The user assistance display control unit 64 that performs different processing from that in the mobile terminal 1 of the first example is described below.

### <User Assistance Display Control Unit 64>

A degree of approach of a finger makes it possible to infer whether the user has already found a target key and is about to press the touch panel or the user is looking for a key that the user intends to press, by moving the operation finger horizontally near the touch panel. For example, as illustrated in Fig. 32, a height H (value of capacitance or the like corresponding to the height H) is set as a limit height (value) for hover position detection, and a height h (value of capacitance or the like corresponding to the height h) is set as a height (value) when the user is about to press a key (H > h, however). In this case, when the tip of the operation finger enters a region of the height H or lower and the height h or higher, it is assumed that the user is looking for a key, and when the tip of the operation finger enters a region of the height h or lower, it is assumed that the user is about to press a key. With this setting, for example, when the tip of the operation finger enters a region of the height H or lower and the height h or higher, the user is looking for a key, and therefore an assistance display that is a display of the target key of the same size is displayed at the same position as the target key. Then, an assistance display is displayed at a different position from the target key, as described above. When the tip of the operation finger enters a region of the height h or lower, the user is about to press a key, and therefore an assistance display that is an enlarged display of the target key is displayed at the same position as the target key. Then, an assistance display is displayed at a different position from the target key, as described above. This can make assistance displays that assist the user more adequately. Therefore, the user assistance display control unit 64 of the present example acquires a distribution of a physical quantity, such as capacitance or infrared, indicating a degree of approach of the operation finger to the touch panel and detects a hover height of the tip of the operation finger from the distribution of the physical quantity. Then, the user assistance display control unit 64 decides a first assistance display that is an enlarged display of a target key in response to a display key enlargement factor predetermined depending on the detected hover height of the tip of the operation finger and is displayed at the same position as the target key and a second assistance display that is displayed at a different position from the target key, and generates a display control signal indicating that the assistance displays are to be displayed (S64). Specifically, as illustrated in Fig. 30, the user assistance display control unit 64 includes a display control unit 641, an enlargement factor decision unit 642, and a capacitance distribution acquisition unit 643. The capacitance distribution acquisition unit 643 acquires a capacitance distribution (SS643). The enlargement factor decision unit 642 detects a hover height of the tip of the operation finger from the acquired capacitance distribution, and decides a first assistance display that is an enlarged display of a target key in response to a display key enlargement factor predetermined depending on the detected hover height of the tip of the operation finger and is displayed at the same position as the target key and a second assistance display that is displayed at a different position from the target key (SS642). The display control unit 641 generates and outputs a display control signal indicating that the decided assistance displays are to be displayed (SS641).

Thus, in the mobile terminal 6 of the present example, in addition to the effects of the first example, the user assistance display control unit 64 adjusts a display key enlargement factor and decides assistance displays in consideration of a hover height of the tip of the operation finger, and it is therefore possible to make a key display with which the user makes an input more easily.

### [SIXTH EXAMPLE]

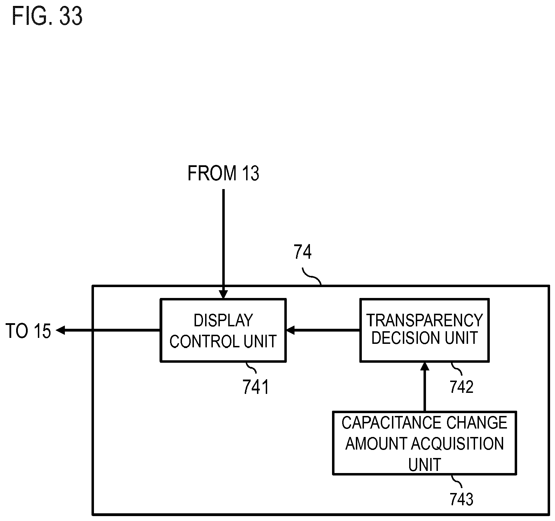

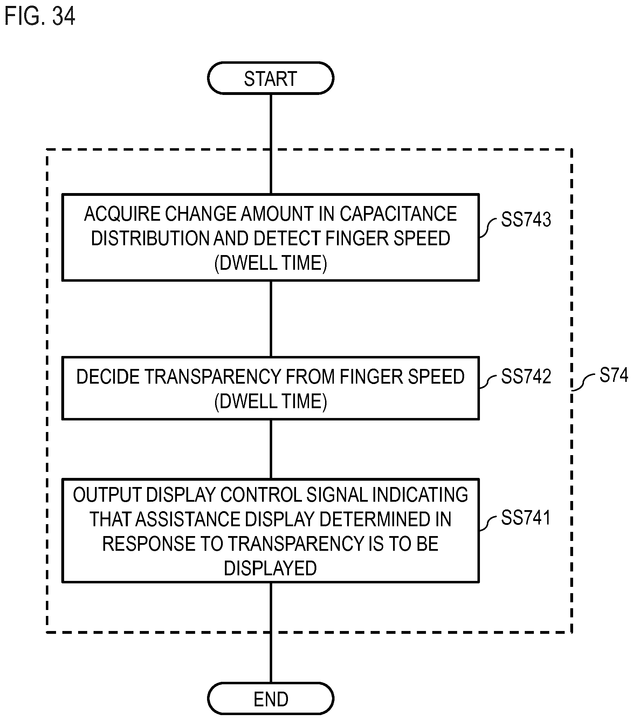

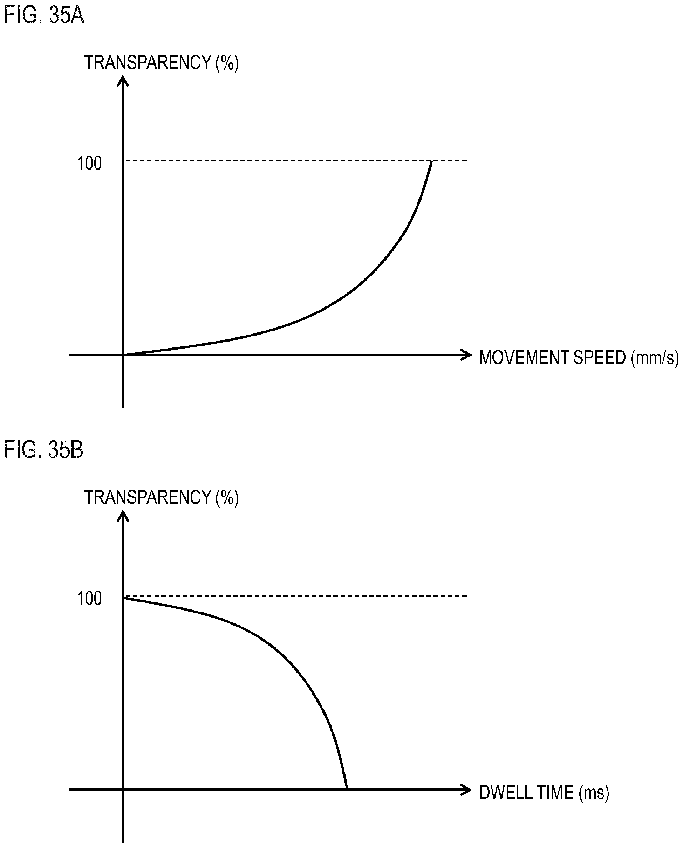

A mobile terminal 7 of a sixth example is described below with reference to Figs. 5 and 33 to 35. Fig. 33 is a block diagram illustrating a configuration of a user assistance display control unit 74 of the present example. Fig. 34 is a flowchart illustrating operation of the user assistance display control unit 74 of the present example. Fig. 35 illustrates a relationship between a transparency and a movement speed (dwell time).

As illustrated in Fig. 5, the mobile terminal 7 of the present example includes the hover position detection unit 11, the hover position correction unit 12, the target key identification unit 13, the user assistance display control unit 74, and the display 15. The hover position detection unit 11, the hover position correction unit 12, the target key identification unit 13, and the display 15 are exactly the same as those components with the same numerals in the mobile terminal 1 of the first example, and the description is omitted. The user assistance display control unit 74 that performs different processing from that in the mobile terminal 1 of the first example is described below.

### <User Assistance Display Control Unit 74>

A speed at which the operation finger moves also makes it possible to infer whether the user has already found a target key and is about to press the touch panel or the user is looking for a key that the user intends to press, by moving the operation finger horizontally near the touch panel. When the user moves the operation finger relatively quickly, it is considered that the user is searching for a key, or when the operation finger almost stops, it can be assumed that the user is about to press the touch panel. Therefore, a relationship between a movement speed of the operation finger and a transparency is determined as illustrated in Fig. 35A, and as the movement speed increases, the assistance display transparency is enhanced. This makes a screen display behind an assistance display easier to see, thereby allowing the user to make a key search easily. On the other hand, as the movement speed becomes closer to 0, the assistance display transparency is made closer to 0. This displays a more complete assistance display and enables the key that the user intends to press to be determined easily, thereby allowing the user to perform a key operation easily. In addition, a relationship between dwell time of the operation finger and a transparency is determined, for example, as in Fig. 35B, and when there is little dwell time, the assistance display transparency is enhanced. This makes a screen display behind an assistance display easier to see, thereby allowing the user to make a key search easily. As the dwell time accumulates, the assistance display transparency is made closer to 0. This displays a more complete assistance display and enables the key that the user intends to press to be determined easily, thereby allowing the user to perform a key operation easily. Therefore, the user assistance display control unit 74 of the present example acquires a change amount in a distribution of a physical quantity, such as capacitance or infrared, indicating a degree of approach of the operation finger to the touch panel, detects a movement speed of the operation finger or dwell time of the operation finger from the change amount, decides an assistance display in response to a display key transparency predetermined depending on the detected movement speed of the operation finger or the detected dwell time of the operation finger, and generates a display control signal indicating that the assistance display is to be displayed (S74). Specifically, as illustrated in Fig. 33, the user assistance display control unit 74 includes a display control unit 741, a transparency decision unit 742, and a capacitance change amount acquisition unit 743. The capacitance change amount acquisition unit 743 acquires a change amount in a capacitance distribution (SS743). The transparency decision unit 742 detects a movement speed of the operation finger or dwell time of the operation finger from the acquired change amount in the capacitance distribution, and decides an assistance display in response to a display key transparency predetermined depending on the detected movement speed of the operation finger or the detected dwell time of the operation finger (SS742). The display control unit 741 generates and outputs a display control signal indicating that the decided assistance display is to be displayed (SS741).

Thus, in the mobile terminal 7 of the present example, in addition to the effects of the first example, the user assistance display control unit 74 adjusts a display key transparency and decides an assistance display in consideration of a movement speed or dwell time of the operation finger, and it is therefore possible to make a key display with which the user makes an input more easily.

### [SEVENTH EXAMPLE]

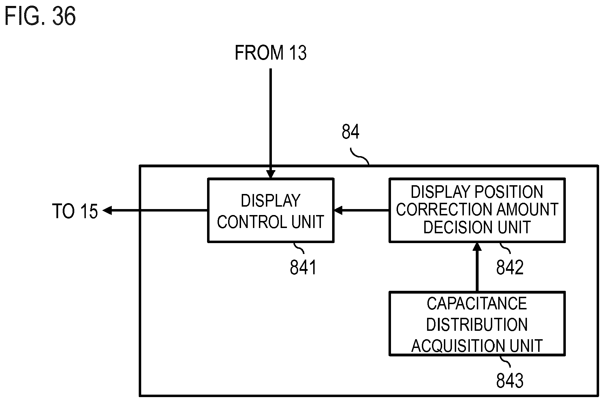

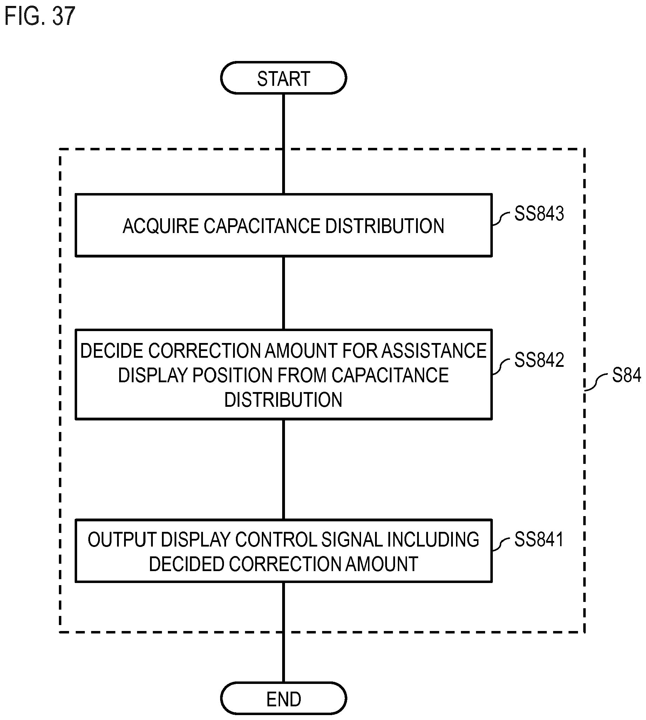

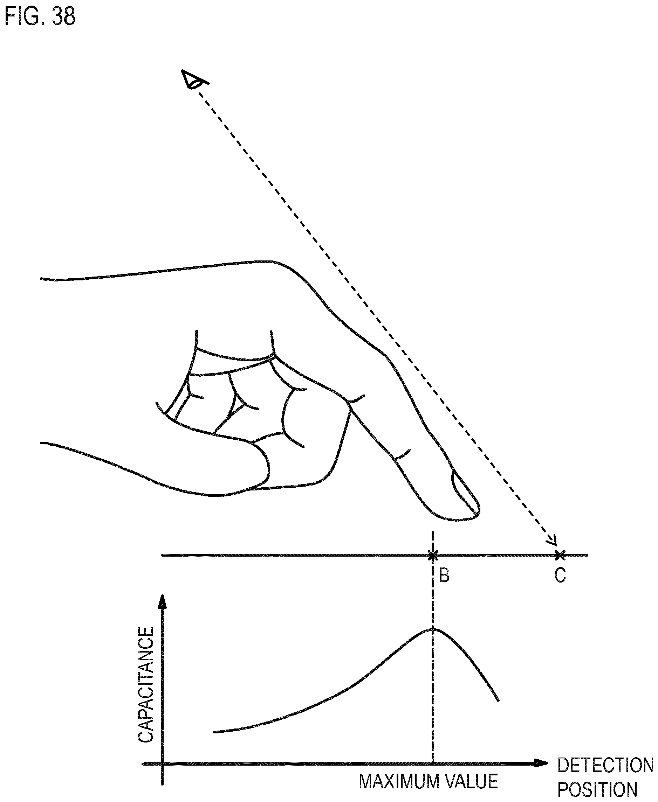

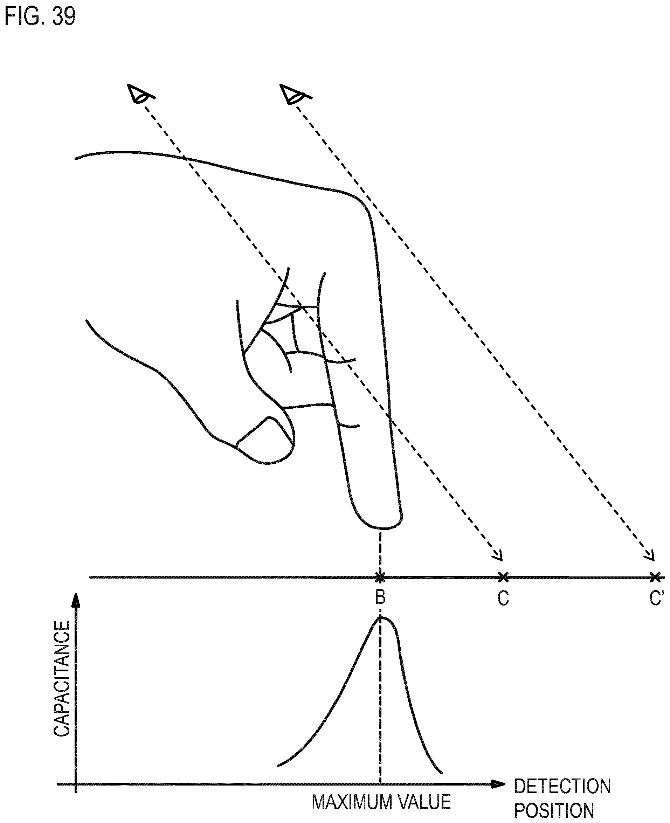

A mobile terminal 8 of the seventh example is described below with reference to Figs. 5 and 36 to 39. Fig. 36 is a block diagram illustrating a configuration of a user assistance display control unit 84 of the present example. Fig. 37 is a flowchart illustrating operation of the user assistance display control unit 84 of the present example. Figs. 38 and 39 illustrate a relationship between a capacitance distribution and an optimum display position of an assistance display.

As illustrated in Fig. 5, the mobile terminal 8 of the present example includes the hover position detection unit 11, the hover position correction unit 12, the target key identification unit 13, the user assistance display control unit 84, and the display 15. The hover position detection unit 11, the hover position correction unit 12, the target key identification unit 13, and the display 15 are exactly the same as those components with the same numerals in the mobile terminal 1 of the first example, and the description is omitted. The user assistance display control unit 84 that performs different processing from that in the mobile terminal 1 of the first example is described below.

### <User Assistance Display Control Unit 84>

As described above, when the user presses the touch panel, the user's hand blocks part of the terminal screen, making it hard to see the screen display. The degree of blocking of the screen changes depending on the state of the user's hand. For example, in Fig. 38, the user performs a touch operation when the angle between the axial direction of the operation finger and the touch panel surface is a relatively shallow angle, while in Fig. 39, the user performs a touch operation when the angle between the axial direction of the operation finger and the touch panel surface is an angle close to perpendicular. In this case, the back of the user's hand in Fig. 39 is at a position that is more likely to block the user's line of sight than that of the back of the user's hand in Fig. 38. For example, when an assistance display is made at a position of a point C in Fig. 38, the assistance display is not blocked by the user's hand if the user's hand is in the state of the hand in Fig. 38. However, even when an assistance display is made at a position of the point C while the user's hand is in the state of the hand in Fig. 39, the assistance display is hidden behind the back of the user's hand and out of view. In the case of Fig. 39, an assistance display should be made at a position of a point C' at which the point C is shifted further to the upper side of the screen. As described above, the angle between the axial direction of the user's operation finger and the touch panel surface can be predicted by focusing on the form of a distribution of a physical quantity, such as capacitance or infrared, indicating a degree of approach of the operation finger to the touch panel. As in Fig. 38, when the angle between the axial direction of the user's operation finger and the touch panel surface is small, a distribution of a physical quantity forms a gentle curve that is convex upward with the maximum value at the center. In contrast, as in Fig. 39, when the angle between the axial direction of the user's operation finger and the touch panel surface is closer to perpendicular, a distribution of a physical quantity forms a steep curve that is convex upward with the maximum value at the center. Therefore, the user assistance display control unit 84 of the present example acquires a distribution of a physical quantity indicating a degree of approach of the operation finger to the touch panel, acquires a differential value in the distribution, decides an assistance display in response to an assistance display position predetermined in association with the differential value, and generates a display control signal indicating that the assistance display is to be displayed (S84). Specifically, as illustrated in Fig. 36, the user assistance display control unit 84 includes a display control unit 841, a display position correction amount decision unit 842, and a capacitance distribution acquisition unit 843. The capacitance distribution acquisition unit 843 acquires a capacitance distribution (SS843). The display position correction amount decision unit 842 acquires a differential value in the acquired capacitance distribution, and decides an assistance display in response to an assistance display position predetermined in association with the differential value (SS842). The display control unit 841 generates and outputs a display control signal indicating that the decided assistance display is to be displayed (SS841).

Thus, in the mobile terminal 8 of the present example, in addition to the effects of the first example, the user assistance display control unit 84 adjusts an assistance display position in consideration of the extent to which the user's hand blocks the screen, and it is therefore possible to make a key display with which the user makes an input more easily.

One embodiment and seven examples of the present invention have been described as above, and in addition to them, for example, it is also possible to implement a mobile terminal in which the user assistance display control unit 14 of the mobile terminal 1' of the first modification is replaced with any of the user assistance display control units 54, 64, 74, and 84. Similarly, it is also possible to implement a mobile terminal in which the hover position correction unit 22 is combined with any of the user assistance display control units 54, 64, 74, and 84. Similarly, it is also possible to implement a mobile terminal in which the hover position correction unit 32 is combined with any of the user assistance display control units 54, 64, 74, and 84. Similarly, it is also possible to implement a mobile terminal in which the hover position correction unit 42 is combined with any of the user assistance display control units 54, 64, 74, and 84.

Each type of processing described above may be executed not only time sequentially according to the order in the description but also in parallel or individually when necessary or according to the processing capability of each apparatus that executes the processing. It should be appropriated that appropriate changes can be made to the embodiment without departing from the scope of the present invention.

When the configurations described above are implemented by a computer, the processing details of the functions that should be provided by each apparatus are described in a program. When the program is executed by the computer, the processing functions are implemented on the computer.

The program containing the processing details can be recorded in a computer-readable recording medium. The computer-readable recording medium may be, for example, any recording medium such as a magnetic recording device, an optical disc, a magneto-optical recording medium, and a semiconductor memory.

The program is distributed by selling, transferring, or lending a portable recording medium, such as a DVD or a CD-ROM, with the program recorded on it, for example. The program may also be distributed by storing the program in a storage unit of a server computer and transferring the program from the server computer to another computer through a network.

A computer that executes this type of program first stores the program recorded on a portable recording medium or the program transferred from the server computer in its storage unit, for example. Then, the computer reads the program stored in its storage unit and executes processing in accordance with the read program. In a different program execution form, the computer may read the program directly from the portable recording medium and execute processing in accordance with the program, or the computer may execute processing in accordance with the program each time the computer receives the program transferred from the server computer. Alternatively, the above-described processing may be executed by a so-called application service provider (ASP) service, in which the processing functions are implemented just by giving program execution instructions and obtaining the results without transferring the program from the server computer to the computer.

The program of this form includes information that is provided for use in processing by the computer and is treated correspondingly as a program (something that is not a direct instruction to the computer but is data or the like that has characteristics that determine the processing executed by the computer). In this form, each apparatus is implemented by executing the predetermined program on the computer, but at least part of the processing details may be implemented by hardware.

## Claims

1. A terminal device (1) comprising:
a hover position detection unit (11) adapted to measure a distribution of a physical quantity indicating a degree of approach of an operation finger to a touch panel, and detect a hover position (B - Fig. 9) from the distribution of the physical quantity;
a target key identification unit (13) adapted to identify, as a target key, a key corresponding to a display region including coordinates of an input hover position;
a hover position correction unit;
**characterized by**:
a user assistance display control unit (14) adapted to generate a display control signal indicating that an assistance display representing the target key is to be displayed at a different position from a display position of the target key; and
a display (15) adapted to make a screen display in accordance with the display control signal, and
**characterized in that**
said hover position correction unit (12) is further adapted to:
acquire a change amount in a distribution of a physical quantity indicating a degree of approach of a finger in a predetermined detection exclusion region;
delete a hover position detected in the detection exclusion region when the change amount is less than a predetermined threshold value; and
correct the hover position (B - Fig. 9) by a predetermined distance to output a corrected hover position (A - Fig. 9) when the change amount is not less than the predetermined threshold value,
the input hover position is the corrected hover position (A - Fig. 9).

2. The terminal device according to Claim 1, wherein
the user assistance display control unit acquires a distribution of a physical quantity indicating a degree of approach of the operation finger to the touch panel, detects a size of a finger from the distribution of the physical quantity, decides the assistance display in response to the number of display keys predetermined depending on the detected size of the finger, and generates the display control signal indicating that the assistance display is to be displayed.

3. The terminal device according to Claim 1, wherein
the user assistance display control unit acquires a distribution of a physical quantity indicating a degree of approach of the operation finger to the touch panel, detects a hover height of a tip of the operation finger from the distribution of the physical quantity, decides the assistance display in response to a display key enlargement factor predetermined depending on the detected hover height of the tip of the operation finger, and generates the display control signal indicating that the assistance display is to be displayed.

4. The terminal device according to Claim 1, wherein
the user assistance display control unit acquires a change amount in a distribution of a physical quantity indicating a degree of approach of the operation finger to the touch panel, detects a movement speed of the operation finger or dwell time of the operation finger from the change amount, decides the assistance display in response to a display key transparency predetermined depending on the detected movement speed of the operation finger or the detected dwell time of the operation finger, and generates the display control signal indicating that the assistance display is to be displayed.

5. The terminal device according to Claim 1, wherein
the user assistance display control unit acquires a distribution of a physical quantity indicating a degree of approach of the operation finger to the touch panel, acquires a differential value in the distribution, decides the assistance display in response to an assistance display position predetermined in association with the differential value, and generates the display control signal indicating that the assistance display is to be displayed.

6. A computer-readable recording medium recording a program for causing a terminal device to function as a terminal device according to any one of Claims 1 to 5.

## Patentansprüche

1. Endgerät (1), umfassend:
eine Schwebepositions-Erfassungseinheit (11), die dazu eingerichtet ist, eine Verteilung einer physikalischen Größe zu messen, die einen Annäherungsgrad eines Bedienfingers an ein Touchpanel anzeigt, und eine Schwebeposition (B- Fig. 9) aus der Verteilung der physikalischen Größe zu erfassen;
eine Zieltasten-Identifikationseinheit (13), die dazu eingerichtet ist, als eine Zieltaste eine Taste zu identifizieren, die einem Anzeigebereich entspricht, der Koordinaten einer eingegebenen Schwebeposition umfasst;
eine Schwebepositions-Korrektureinheit;
**gekennzeichnet durch**:
eine Benutzerunterstützungs-Anzeigesteuereinheit (14), die dazu eingerichtet ist, ein Anzeigesteuersignal zu erzeugen, das anzeigt, dass eine Unterstützungsanzeige, die die Zieltaste darstellt, an einer von einer Anzeigeposition der Zieltaste unterschiedlichen Position angezeigt werden wird; und
eine Anzeige (15), die dazu eingerichtet ist, eine Bildschirmanzeige in Übereinstimmung mit dem Anzeigesteuersignal zu erstellen,
und
**dadurch gekennzeichnet, dass**
die Schwebepositions-Korrektureinheit (12) ferner dazu eingerichtet ist, um:
in einer Verteilung einer physikalischen Größe einen Änderungsbetrag zu erfassen, der einen Annäherungsgrad eines Fingers in einem vorbestimmten Erfassungsausschlussbereich anzeigt;
eine in dem Erfassungsausschlussbereich erfasste Schwebeposition zu löschen, wenn der Änderungsbetrag kleiner als ein vorbestimmter Schwellenwert ist; und
die Schwebeposition (B- Fig. 9) um einen vorbestimmten Abstand zu korrigieren, um eine korrigierte Schwebeposition (A- Fig. 9) auszugeben, wenn der Änderungsbetrag nicht kleiner als der vorbestimmte Schwellenwert ist,
die eingegebene Schwebeposition die korrigierte Schwebeposition (A- Fig. 9) ist.

2. Endgerät nach Anspruch 1, wobei
die Benutzerunterstützungs-Anzeigesteuereinheit eine Verteilung einer physikalischen Größe erfasst, die einen Annäherungsgrad des Bedienfingers an das Touchpanel anzeigt, eine Größe eines Fingers aus der Verteilung der physikalischen Größe erfasst, die Unterstützungsanzeige als Reaktion auf die Anzahl von Anzeigetasten, die abhängig von der erfasster Größe des Fingers vorbestimmt wird, festlegt, und das Anzeigesteuersignal erzeugt, das anzeigt, dass die Unterstützungsanzeige angezeigt werden wird.

3. Die Endvorrichtung nach Anspruch 1,wobei
die Benutzerunterstützungs-Anzeigesteuereinheit eine Verteilung einer physikalischen Größe erfasst, die einen Annäherungsgrad des Bedienfingers an das Touchpanel anzeigt, eine Schwebehöhe einer Spitze des Bedienfingers aus der Verteilung der physikalischen Größe erfasst, die Unterstützungsanzeige als Reaktion auf einen Anzeige-Tastenvergrößerungsfaktor festlegt, der abhängig von der erfassten Schwebehöhe der Spitze des Bedienfingers vorbestimmt wird, und das Anzeigesteuersignal erzeugt, das anzeigt, dass die Unterstützungsanzeige angezeigt werden wird.

4. Endgerät nach Anspruch 1, wobei
die Benutzerunterstützungs-Anzeigesteuereinheit in einer Verteilung einer physikalischen Größe einen Änderungsbetrag erfasst, der einen Annäherungsgrad des Bedienfingers an das Touchpanel anzeigt, eine Bewegungsgeschwindigkeit des Bedienfingers oder eine Verweildauer des Bedienfingers aus dem Änderungsbetrag erfasst, die Unterstützungsanzeige als Reaktion auf eine Anzeigetastentransparenz festlegt, die abhängig von der erfassten Bewegungsgeschwindigkeit des Bedienfingers oder der erfassten Verweildauer des Bedienfingers vorbestimmt wird, und das Anzeigesteuersignal erzeugt, das anzeigt, dass die Unterstützungsanzeige angezeigt werden wird.

5. Endgerät nach Anspruch 1, wobei
die Benutzerunterstützungs-Anzeigesteuereinheit eine Verteilung einer physikalischen Größe erfasst, die einen Annäherungsgrad des Bedienfingers an das Touchpanel anzeigt, einen Differenzwert in der Verteilung erfasst, die Unterstützungsanzeige als Reaktion auf eine Unterstützungsanzeigeposition festlegt, die in Zuordnung zu dem Differenzwert vorbestimmt wird, und das Anzeigesteuersignal erzeugt, das anzeigt, dass die Unterstützungsanzeige angezeigt werden wird.

6. Computerlesbares Aufzeichnungsmedium, das ein Programm aufzeichnet, um zu bewirken, dass ein Endgerät als Endgerät nach einem der Ansprüche 1 bis 5 funktioniert.

## Revendications

1. Dispositif terminal (1) qui comprend :
une unité de détection de position de passage (11) conçue pour mesurer une répartition d'une quantité physique qui indique un degré d'approche d'un doigt par rapport à panneau tactile, et pour détecter une position de passage (B - Fig. 9) à partir de la répartition de la quantité physique ;
une unité d'identification de touche cible (13) conçue pour identifier, en tant que touche cible, une touche qui correspond à une zone d'affichage qui comprend les coordonnées d'une position de passage d'entrée ;
une unité de correction de position de passage ;
**caractérisé par** :
une unité de commande d'affichage d'assistance utilisateur (14) conçue pour générer un signal de commande d'affichage qui indique qu'un affichage d'assistance qui représente la touche cible doit être affiché dans une position différente d'une position d'affichage de la touche cible ; et
un afficheur (15) conçu pour effectuer un affichage écran selon le signal de commande d'affichage,
et
**caractérisé en ce que**
ladite unité de correction de position de passage (12) est en outre conçue pour :
acquérir une quantité de changement de répartition d'une quantité physique qui indique un degré d'approche d'un doigt dans une zone d'exclusion de détection prédéterminée ;
supprimer une position de passage détectée dans la zone d'exclusion de détection lorsque la quantité de changement est inférieure à une valeur de seuil prédéterminée ; et
corriger la position de passage (B - Fig. 9) selon une distance prédéterminée afin de délivrer une position de passage corrigée (A - Fig. 9) lorsque la quantité de changement est non inférieure à la valeur de seuil prédéterminée,
la position de passage d'entrée est la position de passage corrigée (A - Fig. 9).

2. Dispositif terminal selon la revendication 1, dans lequel l'unité de commande d'affichage d'assistance utilisateur acquière une répartition d'une quantité physique qui indique un degré d'approche du doigt par rapport au panneau tactile, détecte une taille d'un doigt à partir de la répartition de la quantité physique, décide de l'affichage d'assistance en réponse au nombre de touches à afficher selon la taille détectée du doigt, et génère le signal de commande d'affichage qui indique que l'affichage d'assistance doit être affiché.

3. Dispositif terminal selon la revendication 1, dans lequel l'unité de commande d'affichage d'assistance utilisateur acquière une répartition d'une quantité physique qui indique un degré d'approche du doigt par rapport au panneau tactile, détecte une hauteur de passage d'un bout du doigt à partir de la répartition de la quantité physique, décide de l'affichage d'assistance en réponse à un facteur d'agrandissement de touche d'affichage prédéterminé selon la hauteur de passage détectée du bout du doigt, et génère le signal de commande d'affichage qui indique que l'affichage d'assistance doit être affiché.

4. Dispositif terminal selon la revendication 1, dans lequel l'unité de commande d'affichage d'assistance utilisateur acquière une quantité de changement d'une répartition d'une quantité physique qui indique un degré d'approche du doigt par rapport au panneau tactile, détecte une vitesse de mouvement du doigt ou le temps d'arrêt du doigt à partir de la quantité de changement, décide de l'affichage d'assistance en réponse à une transparence de touche d'affichage prédéterminée selon la vitesse de mouvement détectée du doigt ou le temps d'arrêt détecté du doigt, et génère le signal de commande d'affichage qui indique que l'affichage d'assistance doit être affiché.

5. Dispositif terminal selon la revendication 1, dans lequel l'unité de commande d'affichage d'assistance utilisateur acquière une répartition d'une quantité physique qui indique un degré d'approche du doigt par rapport au panneau tactile, acquière une valeur différentielle au sein de la répartition, décide de l'affichage d'assistance en réponse à une position d'affichage d'assistance prédéterminée en association avec la valeur différentielle, et génère le signal de commande d'affichage qui indique que l'affichage d'assistance doit être affiché.

6. Support d'enregistrement lisible par un ordinateur qui contient un programme destiné à amener un dispositif terminal à fonctionner comme un dispositif terminal selon l'une quelconque des revendications 1 à 5.
